(19) Europäisches Patentamt

European Patent Office

Office européen des brevets

(11) EP 1 551 173 A1

(12) EUROPEAN PATENT APPLICATION
published in accordance with Art. 158(3) EPC

(43) Date of publication:
06.07.2005 Bulletin 2005/27

(51) Int Cl.⁷: H04N 5/232, H04N 9/07
// H04N101:00

(21) Application number: 03792792.8

(22) Date of filing: 22.08.2003

(86) International application number:
PCT/JP2003/010614

(87) International publication number:
WO 2004/019608 (04.03.2004 Gazette 2004/10)

(84) Designated Contracting States:
AT BE BG CH CY CZ DE DK EE ES FI FR GB GR
HU IE IT LI LU MC NL PT RO SE SI SK TR

(30) Priority: 22.08.2002 JP 2002242400

(71) Applicant: Olympus Corporation
Tokyo 151-0072 (JP)

(72) Inventor: TSURUOKA, Takao
Machida-shi, Tokyo 194-0011 (JP)

(74) Representative: von Hellfeld, Axel, Dr. Dipl.-Phys.
Wuesthoff & Wuesthoff
Patent- und Rechtsanwälte
Schweigerstrasse 2
81541 München (DE)

(54) **IMAGING SYSTEM AND IMAGE PROCESSING PROGRAM**

(57) In the image pickup system of the present invention, factors that have an effect on noise such as the signal level, temperature of the CCD during shooting, exposure time, gain and the like are dynamically acquired, the noise level of the CCD is estimated for example for each pixel by a noise estimating unit, and signal components equal to or less than this noise level in the video signals are suppressed by a noise reducing unit, so that a high-quality image that is substantially free of noise is obtained while preserving the edges of the image and the like. Here, the CCD temperature is estimated in the noise estimating unit according to the correlation between the signal variance and the temperature in the optical black region. Furthermore, the noise estimating unit calculates the signal level as an average value in a local region.

FIG.1

EP 1 551 173 A1

**Description**

Technical Field

The present invention relates to an image pickup system and image processing program which reduce random noise arising in the image pickup element system.

Background Art

Generally, noise components are contained in digitized signals obtained from image pickup elements and the associated analog circuits and A/D converters. Such noise components can be divided into two main categories, i. e., fixed pattern noise and random noise.

The abovementioned fixed pattern noise, as typified by defective pixels or the like, is noise that originates mainly in the image pickup elements.

On the other hand, random noise is generated in the image pickup elements and analog circuits, and has characteristics that are close to white noise characteristics.

In regard to the latter random noise, for example, a technique in which the amount of noise N is converted into a function by $N = ab^{cD}$ using constant terms a, b and c that are given as static terms, and the signal level D converted into a density value, the amount of noise N for the signal level D is estimated from this function, and the filtering frequency characteristics are controlled on the basis of the estimated amount of noise N, is disclosed in Japanese Patent Application Laid-Open No. 2001-157057. Using this technique, an appropriate noise reduction treatment can be performed on the signal level.

Furthermore, as another example, a technique such that the difference value $\Delta$ between a pixel of interest and a nearby pixel is determined, the average pixel number n used in the moving average method is controlled by the function $n = a/(\Delta + b)$ using the determined difference value $\Delta$ and constant terms a and b that are given as static terms, and a moving average is not determined in cases where the determined difference value $\Delta$ is equal to or greater than a specified threshold value, is described in Japanese Patent Application Laid-Open No. 2002-57900. By using such a technique, it is possible to perform a noise reduction treatment without causing any deterioration of the original signal such as edges or the like.

However, since the amount of noise varies dynamically according to factors such as the temperature at the time of shooting, exposure time, gain and the like, conversion to a function that matches the amount of noise during shooting cannot be handled in the case of a technique using static constant terms such as that described in the abovementioned Japanese Patent Application Laid-Open No. 2001-157057, so that the precision in estimating the amount of noise is inferior. Furthermore, the filtering frequency characteristics are controlled from the amount of noise; however, since this filtering performs processing equally without discriminating between flat portions and edge portions, the edge portions deteriorate in regions where it is estimated on the basis of the signal level that the amount of noise is large. Specifically, processing that discriminates between the original signal and noise cannot be handled, so that the preservation of the original signal is poor.

Furthermore, in the technique described in Japanese Patent Application Laid-Open No. 2002-57900, the determination of whether or not the moving average method is performed is accomplished by comparison with a threshold value. However, since this threshold value is also given as a static value, variation in the amount of noise according to the signal level cannot be handled, so that the selection of the average number of pixels or moving average method cannot be optimally controlled. Consequently, above technique cannot cope with the precise estimation of the amount of noise and the reduction processing of noise, thus remaining noise components and deteriorating the original signal.

Furthermore, in cases where there are differences in the conditions during shooting or subjects of shooting, e. g., in the case of flat subject of shooting such as skin or the like, or subject of shooting that has a texture structure, the subjective evaluation may be different even if the amount of noise is the same. However, in the abovementioned prior art, such points cannot be handled, so that there is a drawback that a subjectively ideal image may not always be obtainable even if noise reduction processing is performed.

Disclosure of Invention

In short, the image pickup system comprises a noise estimating unit which estimates the amount of noise contained in the digitized signal from an image pickup element in which a plurality of pixels are arranged, either for each pixel or for each specified unit area comprising a plurality of pixels, and a noise reducing unit which reduces the noise in the abovementioned signal on the basis of the amount of noise estimated by this noise estimating unit.

Brief Description of the Drawings

Fig. 1 is a block diagram which shows the construction of the image pickup system in a first embodiment of the present invention;

Fig. 2 is a block diagram which shows the construction of the noise estimating unit in the abovementioned first embodiment;

Fig. 3 is a diagram which shows an example of the arrangement of the OB regions in the abovementioned first embodiment;

Fig. 4 is a graph which shows the relationship between the variance of the OB region and the temperature of the image pickup element in the abovementioned first embodiment;

Fig. 5 is a graph which is used to illustrate the formulization of the amount of noise in the abovementioned first embodiment;

Fig. 6 is a graph which is used to illustrate parameters used in the formulization of the amount of noise in the abovementioned first embodiment;

Fig. 7 is a block diagram which shows the construction of the noise reducing unit in the abovementioned first embodiment;

Fig. 8 is a block diagram which shows the construction of the image pickup system in a second embodiment of the present invention;

Fig. 9 is a diagram which shows the primary color Bayer type filter construction in the color filters of the abovementioned second embodiment;

Fig. 10 is a block diagram which shows the construction of the noise estimating unit in the abovementioned second embodiment;

Fig. 11 is a block diagram which shows the construction of the noise reducing unit in the abovementioned second embodiment;

Fig. 12 is a flow chart which shows the noise reduction processing that is performed by the image processing program in the computer of the abovementioned second embodiment;

Fig. 13 is a block diagram which shows the construction of the image pickup system in a third embodiment of the present invention;

Fig. 14 is a diagram which shows the primary color Bayer type filter construction in the color filters of the abovementioned third embodiment;

Fig. 15 is a block diagram which shows the construction of the shooting situation estimation unit in the abovementioned third embodiment;

Fig. 16 is a diagram which is used to illustrate the split pattern used for exposure controlling in the abovementioned third embodiment;

Fig. 17 is a block diagram which shows the construction of the noise estimating unit in the abovementioned third embodiment;

Fig. 18 is a diagram which is used to illustrate the formulization of the amount of noise in the abovementioned third embodiment;

Fig. 19 is a diagram which is used to illustrate the formulization of the amount of noise in the abovementioned third embodiment;

Fig. 20 is a diagram which is used to illustrate the parameters used in the formulization of the amount of noise in the abovementioned third embodiment;

Fig. 21 is a block diagram which shows the construction of the noise reducing unit in the abovementioned third embodiment;

Fig. 22 is a block diagram which shows the construction of the image pickup system of a fourth embodiment of the present invention;

Fig. 23 is a block diagram which shows one example of the construction of the shooting situation estimating unit in the abovementioned fourth embodiment;

Fig. 24 is a block diagram which shows the construction of the noise estimating unit in the abovementioned fourth embodiment;

Fig. 25 is a flow chart which shows one portion of the noise reduction processing performed by means of an image processing program in a computer in the abovementioned fourth embodiment; and

Fig. 26 is a flow chart which shows another portion of the noise reduction processing performed by means of an image processing program in a computer in the abovementioned fourth embodiment.

Best Mode for Carrying Out the Invention

Embodiments of the present invention will be described below with reference to the attached figures.

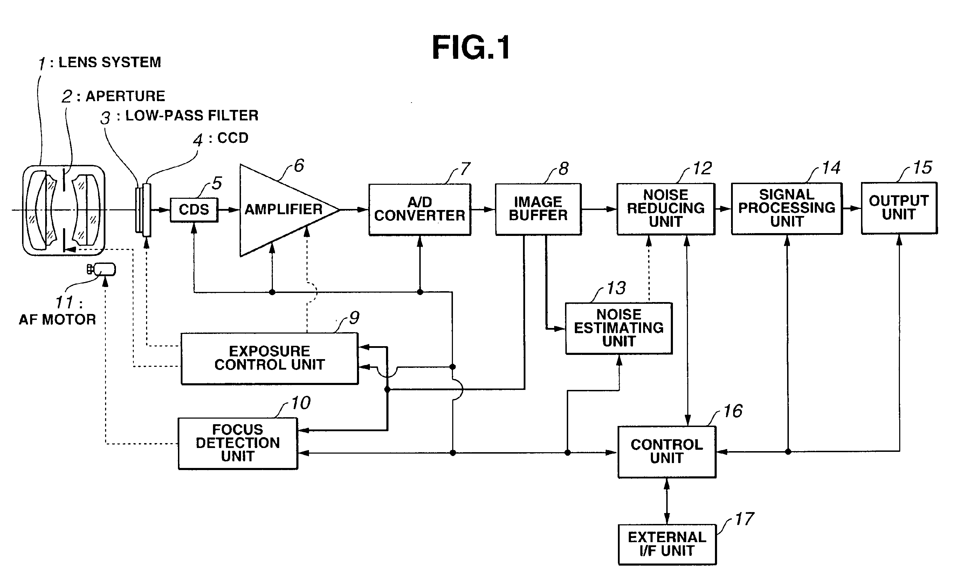

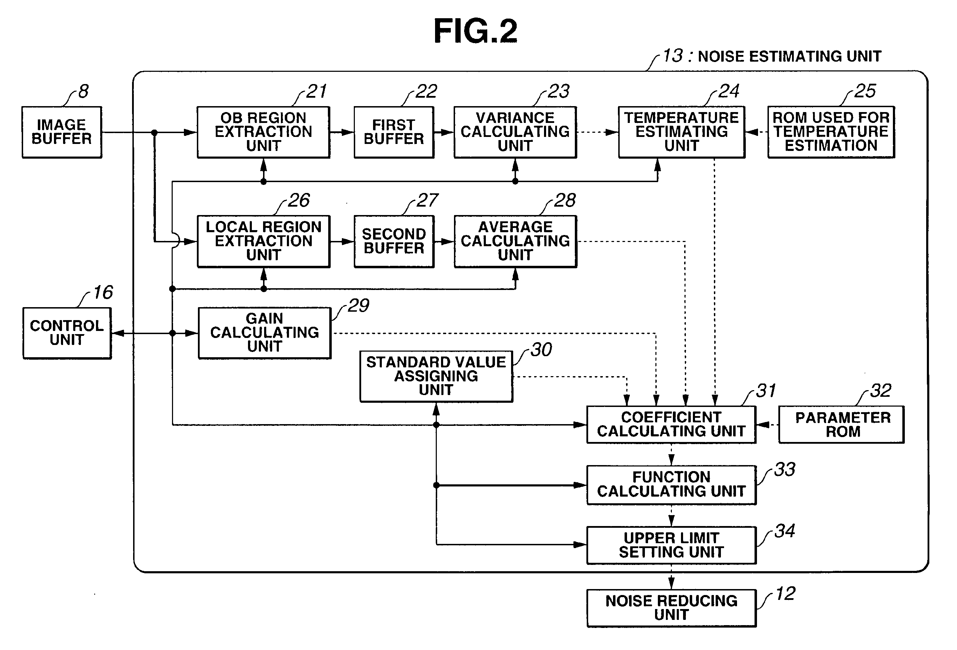

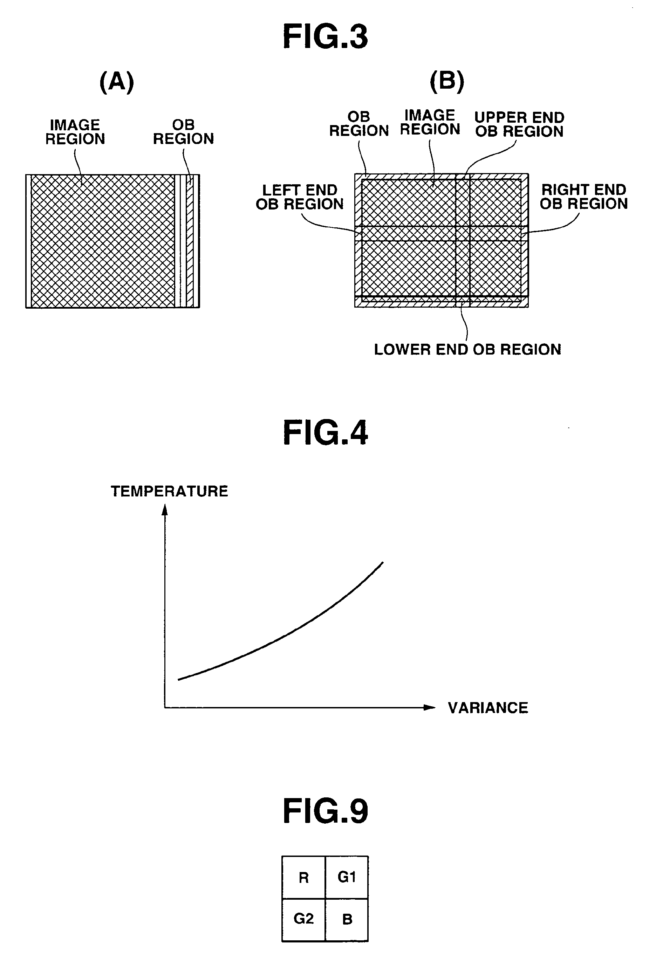

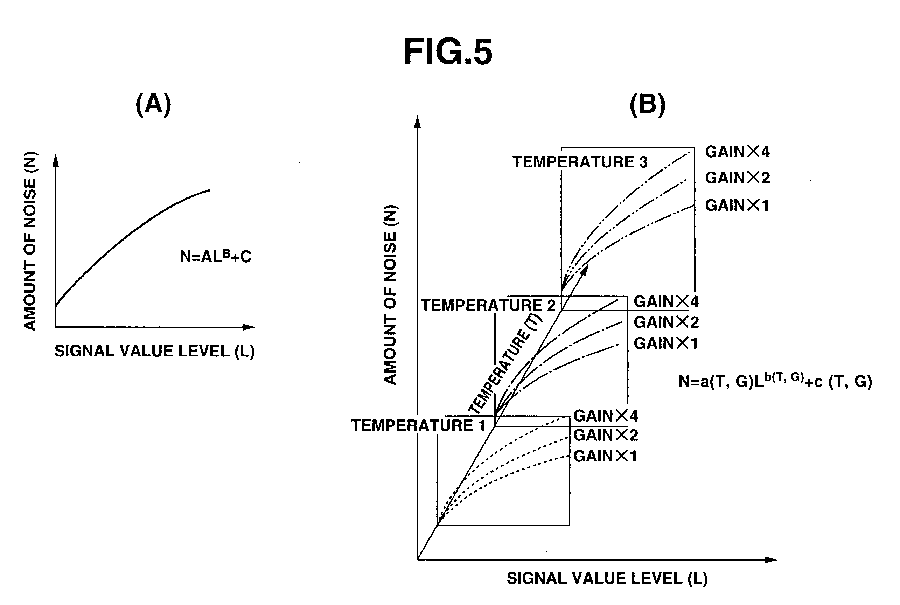

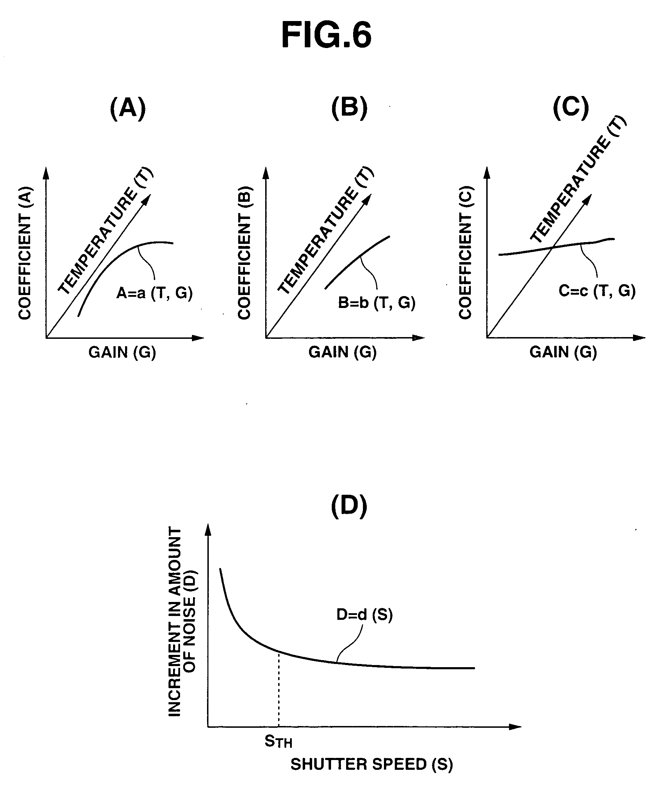

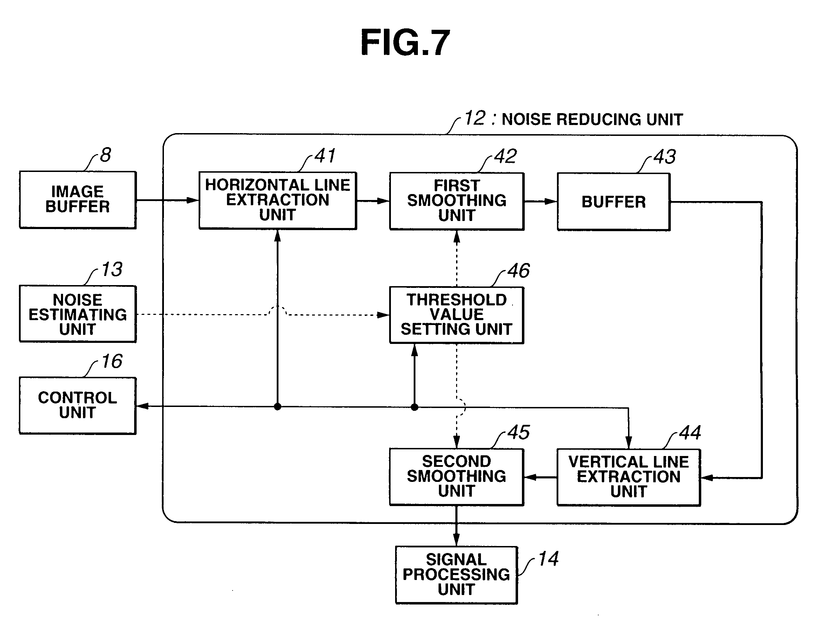

Figs. 1 through 7 illustrate a first embodiment of the present invention. Fig. 1 is a block diagram which shows the construction of the image pickup system, Fig. 2 is a block diagram which shows the construction of the noise estimating unit, Fig. 3 is diagrams which show examples of the arrangement of the OB regions, Fig. 4 is a graph which shows the relationship between the variance of the OB region and the temperature of the image pickup element, Fig. 5 is graphs which are used to illustrate the formulization of the amount of noise, Fig. 6 is graphs which are used to illustrate parameters used in the formulization of the amount of noise, and Fig. 7 is a block diagram which shows the construction of the noise reducing unit.

As is shown in Fig. 1, this image pickup system comprises a lens system 1 which is used to form an image of the subject, an aperture 2 which is arranged inside the lens system 1, and which is used to regulate the range of the luminous flux that passes through the lens system 1, a low-pass filter 3 which is used to eliminate unnecessary high-frequency components from the luminous flux that has been formed into an image by the abovementioned lens system 1, a CCD 4 constituting a black and white image pickup element which subjects the optical image of the subject that is formed via the abovementioned low-pass filter 3 to a photoelectric conversion, and outputs an electrical image signal, a CDS (correlated double sampling) unit 5 which performs correlated double-sampling on the image signal that is output from the abovementioned CCD 4, an amplifier 6 which amplifies the signal that is output from the abovementioned CDS unit 5, an A/D converter 7 which converts the analog image signal amplified by the abovementioned amplifier 6 into a digital signal, an image buffer 8 which temporarily stores the digital image data that is output from the abovementioned A/D converter 7, an exposure control unit 9 which performs light measurement and evaluation relating to the subject on the basis of the image data that is stored in the abovementioned image buffer 8, and which controls the abovementioned aperture 2, CCD 4 and amplifier 6 on the basis of the results of this evaluation, a focus detection unit 10 which detects the focal point on the basis of the image data stored in the abovementioned image buffer 8, and which drives an AF motor 11 (described later) on the basis of the results of this detection, the AF motor 11 which is controlled by the abovementioned focus detection unit 10, and which drives the focusing lens and the like contained in the abovementioned lens system 1, a noise estimating unit 13 constituting noise estimating means that performs noise estimation (as will be described in detail later) on the basis of the image data stored in the abovementioned image buffer 8, a noise reducing unit 12 constituting noise reducing means that performs noise reduction in the image data read out from the abovementioned image buffer 8 using the results of the estimation performed by the abovementioned noise estimating unit 13, a signal processing unit 14 which processes the image data output from the abovementioned noise reducing unit 12, an output unit 15 which outputs the image data from the abovementioned signal processing unit 14 in order to record this data on a memory card or the like, an external I/F unit 17 which has interfaces to the power supply switch, shutter button, mode switches that are used to switch between various shooting modes and the like, and a control unit 16 which constitutes control means comprising a microcomputer or the like that is connected bidirectionally to the abovementioned CDS unit 5, amplifier 6, A/D converter 7, exposure control unit 9, focus detection unit 10, noise reducing unit 12, noise estimating unit 13, signal processing unit 14, output unit 15, and external I/F unit 17, so that this control unit comprehensively controls the image pickup system containing these parts, and which also constitutes parameter calculating means and shutter speed calculating means.

Next, the signal flow in an image pickup system such as that shown in Fig. 1 will be described.

The image pickup system is constructed such that the shooting conditions such as the ISO sensitivity and the like can be set via the external I/F unit 17. After these settings have been made, the pre-image-pickup mode is entered by half-pressing a shutter button formed by a two-stage press-button switch.

The video signal that is output by the CCD 4 via the abovementioned lens system 1, aperture 2 and low pass filter 3 is read out as an analog signal by universally known correlated double sampling in the CDS unit 5.

The analog signal is amplified by a specified amount by the amplifier 6, converted into a digital signal by the A/D converter 7, and transmitted to the image buffer 8.

The video signal inside the image buffer 8 is subsequently transmitted to the exposure control unit 9 and the focus detection unit 10.

The exposure control unit 9 determines the brightness level in the image, and controls the aperture value of the aperture 2, the electronic shutter speed of the CCD 4, the amplification rate of the amplifier 6 and the like with the set ISO sensitivity, shutter speed in the limit of movement of the hands and the like being taken into account, so that an appropriate exposure is obtained.

Furthermore, the focus detection unit 10 detects the edge intensity in the image, and obtains a focused image by controlling the AF motor 11 such that this edge intensity is maximized.

When preparations for the real shooting have been completed by performing such a pre-image-pickup mode, the real shooting is then performed when it is detected via the external I/F unit 17 that the shutter button has been fully pressed.

The real shooting is performed on the basis of the exposure conditions determined by the exposure control unit 9 and the focusing conditions determined by the focus detection unit 10. These shooting conditions are transmitted to the control unit 16.

When real shooting is thus performed, the video signal is transmitted to the image buffer 8 and stored in the same manner as in the case of pre-image-pickup.

The video signal inside the image buffer 8 is transmitted to the noise estimating unit 13; furthermore, shooting conditions such as the exposure conditions determined by the exposure control unit 9, the ISO sensitivity set by the external I/F unit 17 and the like are also transmitted to the noise estimating unit 13 via the control unit 16.

On the basis of the abovementioned information and video signal, the noise estimating unit 13 calculates the amount of noise in each unit of a specified size, e. g., in the present embodiment, in each pixel (i. e., in pixel units), and transmits the calculated amount of noise to the noise reducing unit 12. The calculation of the amount of noise in the noise estimating unit 13 is performed under the control of the control unit 16 in synchronization with the processing of the noise reducing unit 12.

On the basis of the amount of noise calculated by the noise estimating unit 13, the noise reducing unit 12 performs noise reduction processing on the video signal inside the image buffer 8, and transmits the video signal that has been subjected to this processing to the signal processing unit 14.

Under the control of the control unit 16, the signal processing unit 14 performs universally known emphasis processing, compression processing and the like on the video signal that has been subjected to noise reduction processing, and transmits the signal that has been subjected to this processing to the output unit 15.

The output unit 15 records and stores the received video signal on a memory card or the like.

Next, one example of the construction of the noise estimating unit 13 will be described with reference to Fig. 2.

The noise estimating unit 13 comprises: an OB region extraction unit 21 which extracts the signal of an OB (optical black) region arranged on the right side of the image region of the CCD 4 (as shown for example in Fig. 3A) from the video signal stored in the image buffer 8 under the control of the control unit 16; a first buffer 22 which stores the signal of the OB region extracted by the OB region extraction unit 21; a variance calculating unit 23 constituting variance calculating means which reads out the signal of the OB region stored in the abovementioned first buffer 22, calculate the variance value of this signal, and use information relating to the exposure conditions transmitted from the abovementioned control unit 16 to perform a correction for the amount of amplification of the abovementioned amplifier 6 on this variance value; a ROM 25 used for temperature estimation constituting temperature estimating means in which the premeasured relationship between the variance value and the temperature of the image pickup element is recorded; a temperature estimating unit 24 constituting temperature estimating means which is parameter calculating means that determines the temperature of the image pickup element on the basis of the variance value output from the abovementioned variance calculating unit 23 and information from the abovementioned ROM 25 used for temperature estimation; a local region extraction unit 26 constituting signal value calculating means that extracts local regions of a specified size in specified positions from the video signal stored in the abovementioned image buffer 8; a second buffer 27 which stores the signals of the local regions extracted by the abovementioned local region extraction unit 26; an average calculating unit 28 constituting signal value calculating means which is parameter calculating means that reads out the signals of the local regions stored in the abovementioned second buffer 27, calculates the average value of these signals, and outputs this average value as the signal value level of the pixel of interest; a gain calculating unit 29 constituting gain calculating means which is parameter calculating means that calculate the amount of amplification of the abovementioned amplifier 6 on the basis of information relating to the exposure conditions (ISO sensitivity, exposure information, white balance information and the like) transmitted from the abovementioned control unit 16; a standard value assigning unit 30 constituting assigning means that provides standard values in cases where any of the parameters are omitted; a parameter ROM 32 constituting coefficient calculating means that store parameters relating to functions (described later) that are used to estimate the amount of noise; a coefficient calculating unit 31 constituting coefficient calculating means which is noise amount calculating means that estimates the amount of noise for the pixel of interest by means of a specified formula, on the basis of information relating to the parameters that are read out from the abovementioned parameter ROM 32, the temperature of the image pickup element that is output from the abovementioned temperature estimating unit 24 or the abovementioned standard value assigning unit 30, the signal value level that is output from the abovementioned average calculating unit 28 or the abovementioned standard value assigning unit 30, the amount of amplification that is output from the abovementioned gain calculating unit 29 or the abovementioned standard value assigning unit 30, and the shutter speed that is output from the abovementioned control unit 16 or the abovementioned standard value assigning unit 30; a function calculating unit 33 constituting function calculating means which is noise amount calculating means that calculate the amount of noise using functions formulized (as will be described later) by means of the coefficients output from the abovementioned coefficient calculating unit 31; and an upper limit setting unit 34 constituting upper limit value setting means that sets a limit and output this limit to the abovementioned noise reducing unit 12 such that the amount of noise that is output from the abovementioned function calculating unit 33 does not exceed a specified threshold value.

In the present embodiment, since the processing of the noise reducing unit 12 is separated in the horizontal direction and vertical direction (as will be described later), the abovementioned local region extraction unit 26 is devised such that extraction is performed while the overall image is successively scanned in (for example) $4 \times 1$ size units in the case of horizontal-direction processing, and in (for example) $1 \times 4$ size units in the case of vertical-direction processing. The processing performed by the local region extraction unit 26 is performed in synchronization with the processing of the noise reducing unit 12.

Furthermore, the upper limit setting unit 34 is provided in consideration of cases in which the reduction processing for the theoretical amount of noise becomes subjectively excessive. Specifically, in cases where the amount of noise is large, there may be instances in which the original signal is lost and a deterioration in the image quality is felt subjectively if this noise is completely eliminated. Accordingly, this unit is devised such that the preservation of the original signal is given priority, and the total image quality is increased, even if this means that noise components remain. Furthermore, the function of the upper limit setting unit 34 can also be stopped by the control unit 16 by operation from the external I/F unit 17.

Furthermore, the abovementioned control unit 16 is connected bidirectionally to the abovementioned OB region extraction unit 21, variance calculating unit 23, temperature estimating unit 24, local region extraction unit 26, average calculating unit 28, gain calculating unit 29, standard value assigning unit 30, coefficient calculating unit 31, function calculating unit 33, and upper limit setting unit 34, and controls these units.

The relationship between the variance of the OB region and the temperature of the image pickup element estimated in the abovementioned temperature estimating unit 24 will be described with reference to Fig. 4.

As is shown in this figure, the temperature of the image pickup element rises in a monotonic increase while describing a curve as the variance of the OB region increases.

In the case of random noise in the OB region, in which there is no incident light, dark current noise is the governing factor, and this dark current noise is related to the temperature of the image pickup element.

Accordingly, the random noise of the OB region is calculated as a variance value, and the relationship between this variance value and the temperature variation of the image pickup element is measured beforehand and stored in the ROM 25 used for temperature estimation. As a result, the temperature estimating unit 24 can estimate the temperature of the CCD 4 (which is the image pickup element) from the variance value that is calculated by the variance calculating unit 23, using the corresponding relationship that is stored in the ROM 25 used for temperature estimation.

Furthermore, in the above description, it is considered that the temperature of the image pickup element is the same at all positions on the element, and only one temperature is determined. However, the present invention need not be limited to this; it would also be possible to construct this unit such that local temperatures at respective points on the element are determined.

For example, as is shown in Fig. 3B, it would also be possible to devise this unit such that OB regions are arranged on the four sides of the image region, variance values for the OB regions positioned respectively on the upper end, lower end, left end and right end are determined with respect to specified blocks in the image, and variance values for the specified blocks are determined by a linear interpolation of these variance values. As a result, a highly precise temperature estimation can be accomplished even in cases where the temperature of the image pickup element is non-uniform.

Next, the formulization of the amount of noise that is used when the amount of noise of the pixel of interest is estimated by the coefficient calculating unit 31 will be described with reference to Figs. 5A and 5B.

The function of the amount of noise N with respect to the signal value level L is formulized as shown by the following equation (1).

$$N = AL^{B} + C \tag{1}$$

Here, A, B and C are constant terms, and a constant term is added to a function expressing a power of the signal value level L.

If the outline of this function in a case where (for example) $A > 0$, $0 < B < 1$ and $C > 0$ is plotted, a shape such as that shown in Fig. 5A is obtained.

However, the amount of noise N does not depend on the signal value level L alone, but also varies according to the temperature of the CCD 4 which constitutes the image pickup element, and the gain of the amplifier 6. Accordingly, the example shown in Fig. 5B takes these factors into account.

Specifically, instead of A, B and C which are constant terms in the abovementioned equation (1), $a(T, G)$, $b(T, G)$ and $c(T, G)$ which use the temperature T and gain G as parameters are introduced as shown in equation (2).

$$N = a(T, G)L^{b(T, G)} + c(T, G) \qquad\qquad (2)$$

Fig. 5B shows how the curve indicated by this equation (2) is plotted in the case of a plurality of gains G (1, 2 and 4 times in the example shown in the figure) at a plurality of temperatures T (T1 through T3 in the example shown in the figure).

In Fig. 5B, an independent variable is expressed as the signal value level L, and a dependent variable is expressed as the amount of noise N. The temperature T which is used as a parameter is plotted as a coordinate axis in the direction perpendicular to these variables. Accordingly, the amount of noise N according to the signal value level L is read respectively within the plane expressed by T = T1, within the plane expressed by T = T2 and within the plane expressed by T = T3. In this case, the variation of the curve shape caused by the gain G (which is a parameter) is expressed by drawing a plurality of curves within the respective planes.

The individual curves indicated by the respective parameters have a configuration that is more or less similar to the curve produced by equation (1) as shown in Fig. 5A; however, the respective coefficients a, b and c naturally vary according to the respective values of the temperature T and gain G.

Fig. 6A shows an outline of the characteristics of the abovementioned function a(T, G), Fig. 6B shows an outline of the abovementioned function b(T, G), and Fig. 6C shows an outline of the abovementioned function c(T, G).

Since these respective functions are two-variable functions with the temperature T and gain G as independent variables, Figs. 6A through 6C are plotted as three-dimensional coordinates, and the plots of the functions form curved surfaces in these plotted spaces. Here, however, instead of showing the concrete shapes of the curved surfaces, the major variations in the characteristics are shown using curves.

As a result of the temperature T and gain G being input as parameters into such functions a, b, and c, the respective constants terms A, B and C are output. Furthermore, the concrete shapes of these functions can easily be acquired beforehand by measuring the characteristics of the image pickup element system including the CCD 4 and amplifier 6.

Random noise tends to increase as the exposure time becomes longer. Consequently, if the combination of shutter speed and aperture value differs, there may be a difference in the amount of noise that is generated, even if the amount of exposure is the same. Accordingly, an example in which a correction is performed with such differences being taken into account will be described with reference to Fig. 6D.

Here, a correction coefficient d(S) which uses the shutter speed S as a parameter is introduced, and correction by a formulization of the type shown in equation (3) is performed by means of multiplying the equation (2) and this correction coefficient together.

$$N = \{a(T, G)L^{b(T, G)} + c(T, G)\}d(S) \qquad\qquad (3)$$

The functional shape of this correction coefficient d(S) is obtained by measuring the characteristics of the image pickup element system beforehand. For example, this function has a shape such as that shown in Fig. 6D. Fig. 6D shows the increment D in the amount of noise for the shutter speed S.

As is shown in Fig. 6D, the increment D in the amount of noise has the property of increasing abruptly when the shutter speed S is smaller than a certain threshold value $S_{TH}$ (i. e., when the exposure time is long). Accordingly, two different procedures are used according to whether the shutter speed S is higher or lower than this threshold value $S_{TH}$; the function d(S) is used in the case of a long exposure time, but the procedure may be simplified such that a fixed coefficient is used in the case of a short exposure time.

The four functions a(T, G), b(T, G), c(T, G) and d(S) mentioned above are stored in the abovementioned parameter ROM 32. Furthermore, the correction for the shutter speed need not always be prepared as a function, but may also be prepared as some other means, e. g., as a table or the like.

The coefficient calculating unit 31 calculates the respective coefficients A, B, C and D using the four functions stored in the parameter ROM 32, taking as parameters the temperature T, gain G and shutter speed S that are dynamically acquired (or acquired from the standard value assigning unit 30).

The function calculating unit 33 determines the functional shapes used to calculate the amount of noise N by applying the respective coefficients A, B, C and D calculated by the abovementioned coefficient calculating unit 31 to the abovementioned equation (3); this unit calculates the amount of noise N according to the signal value level L that is output from the abovementioned average calculating unit 28 via the abovementioned coefficient calculating unit 31.

In this case, the respective parameters such as the temperature T, gain G, shutter speed S and the like need not always be determined for each shooting. For examples, since the temperature T stabilizes after a fixed period of time has elapsed following the switching on of the power supply, it would also be possible for the control unit 16 to store temperature information calculated in the temperature estimating unit 24 following this stabilization in the standard value assigning unit 30, and to omit the subsequent calculation process so that temperature information read out from the standard value assigning unit 30 is used. Thus, in cases where parameters from the temperature estimating unit 24, average calculating unit 28, gain calculating unit 29, control unit 16 and the like are not obtained, the standard value assigning unit 30 sets and outputs standard parameters; as a result, the speed of the processing can be increased, and power can be saved. Furthermore, the standard value assigning unit 30 can also output standard values for other required parameters.

Next, one example of the construction of the noise reducing unit 12 will be described with reference to Fig. 7.

The noise reducing unit 12 comprises: a horizontal line extraction unit 41 which successively extracts video signals in units of horizontal line from the abovementioned image buffer 8; a first smoothing unit 42 constituting smoothing means that scans the image signals of the horizontal lines extracted by the abovementioned horizontal line extraction unit 41 in pixel units and perform universally known hysteresis smoothing with the threshold value from a threshold value setting unit 46 (described later) as the amount of noise; a buffer 43 which stores the video signal for one screen by successively storing the horizontal lines that have been smoothed by the abovementioned first smoothing unit 42; a vertical line extraction unit 44 which successively extracts video signals in units of vertical line from the abovementioned buffer 43 after a video signal corresponding to one screen has been accumulated in the buffer 43; a second smoothing unit 45 constituting smoothing means that scans the image signals of the vertical lines extracted by the abovementioned vertical line extraction unit 44 in pixel units, performs universally known hysteresis smoothing with the threshold value from the threshold value setting unit 46 (described later) as the amount of noise, and successively outputs the signals to the abovementioned signal processing unit 14; and a threshold value setting unit 46 constituting threshold value setting means that acquire the amount of noise estimated by the abovementioned noise estimating unit 13 in pixel units in accordance with the horizontal lines extracted by the abovementioned horizontal line extraction unit 41 or the vertical lines extracted by the abovementioned vertical line extracting unit 44, set the amplitude value of the noise as a threshold value (minimum amplitude value), and output this value to the abovementioned first smoothing unit 42 or the abovementioned second smoothing unit 45.

Here, the hysteresis smoothing performed in the abovementioned first and second smoothing units 42 and 45 is performed under the control of the control unit 16 in synchronization with the operation of the noise estimating unit 13 and the operation of the threshold setting unit 46.

Furthermore, the abovementioned control unit 16 is connected bidirectionally to the abovementioned horizontal line extraction unit 41, vertical line extraction unit 44 and threshold value setting unit 46, and controls these units.

Moreover, in the above description, the amount of noise is estimated in pixel units. However, the present invention is not limited to this; it would also be possible to devise the unit such that the amount of noise is estimated for each arbitrary specified unit area such as (for example) $2 \times 2$ pixels, $4 \times 4$ pixels or the like. In such a case, the precision of noise estimation drops; on the other hand, this is advantageous in that higher-speed processing is possible.

In the first embodiment, the amount of noise is estimated for each pixel or each unit area, and noise reduction processing is performed in accordance with local amounts of noise; accordingly, optical noise reduction is possible in light areas and dark areas, so that a higher-quality image can be obtained.

Furthermore, the respective parameters relating to the amount of noise are dynamically determined for each shooting, and the amount of noise is calculated from these parameters; accordingly, this can be dynamically applied to different conditions for each shooting, so that high-precision estimation of the amount of noise is possible.

Furthermore, the amount of noise is set as a threshold value, and signals that are equal to or less than this threshold value are excluded; accordingly, signals that exceed the threshold value are preserved as original signals, so that a high-quality image in which there is no deterioration of the edge portions, and in which only noise is reduced, can be obtained.

Moreover, the calculated amount of noise is limited such that this amount does not exceed a specified upper-limit value; accordingly, excessive noise reduction processing can be prevented, so that preservation of the edge portions of the original signal can be ensured. In this case, the setting or non-setting of such an upper-limit value can be accomplished by the operation of the device, so that an approach that produces a subjectively better image quality can be selected.

In addition, the signal level of the pixel of interest is acquired by averaging in the region surrounding the pixel of interest; accordingly, the effects of the noise components can be reduced, and high-precision estimation of the amount of noise is possible.

Furthermore, the temperature of the abovementioned image pickup element is estimated from the variance value of the OB region of the image pickup element, and is used as a parameter for the estimation of the amount of noise; accordingly, the amount of noise can be estimated with high precision in dynamic response to variations in temperature during shooting. In this case, since the OB region is utilized, a low-cost image pickup system can be realized.

The amount of gain during shooting is determined on the basis of the ISO sensitivity, exposure information and white balance information, and is used as a parameter in the estimation of the amount of noise; accordingly, the amount of noise can be estimated with high precision in dynamic response to variations in the gain during shooting.

The amount of correction for noise is determined in accordance with the shutter speed used; accordingly, the amount of noise can also be estimated with high precision even in the case of noise that increases during long-term exposure, in dynamic response to the shutter speed during shooting.

Standard values are set for parameters that are not obtained during shooting; furthermore, coefficients for the calculation of the amount of noise are determined together with the parameters that are obtained, and the amount of noise is calculated from these coefficients. Accordingly, the amount of noise can be estimated even in cases where the necessary parameters are not obtained during shooting, so that a stable noise reducing effect can be obtained. Furthermore, since functions are used in the calculation of the amount of noise, the required amount of memory is small, so that costs can be reduced. Moreover, by intentionally omitting some of the parameter calculations, it is possible to reduce costs and save power.

Thus, in the present embodiment, even if the factors that affect the amount of noise vary dynamically, the amount of noise can be appropriately reduced in accordance with these varying factors, so that a high-quality image can be obtained.

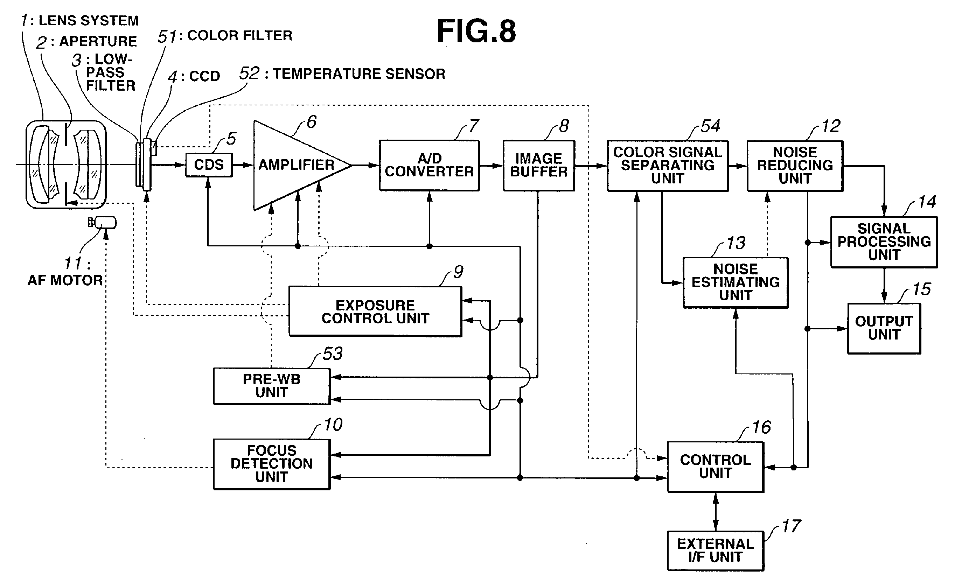

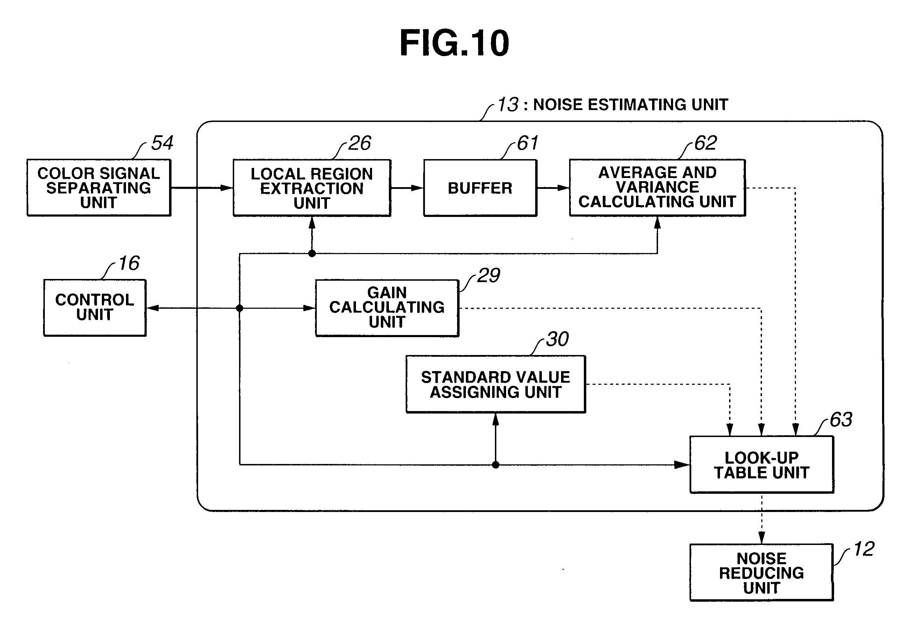

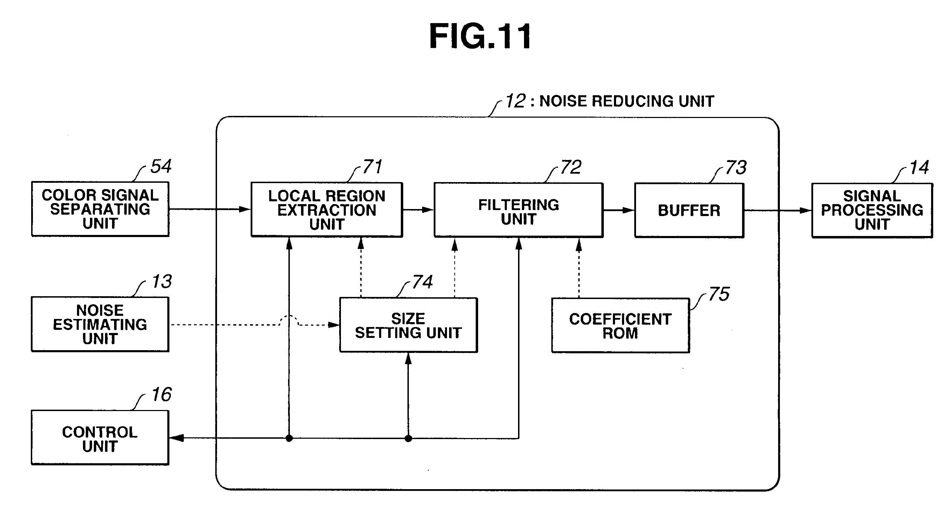

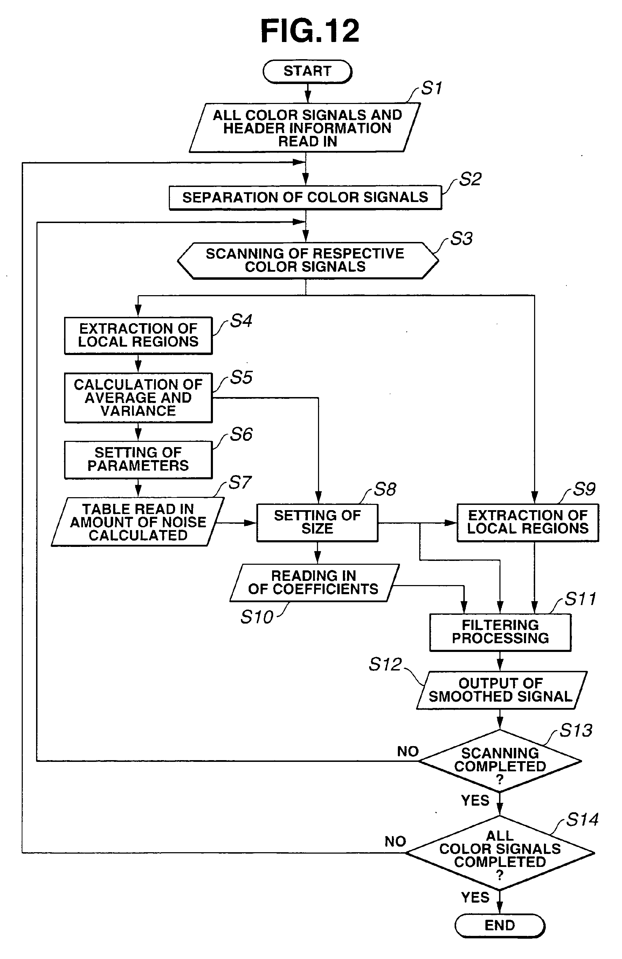

Figs. 8 through 12 show a second embodiment of the present invention. Fig. 8 is a block diagram which shows the construction of the image pickup system, Fig. 9 is a diagram which shows the primary color Bayer type filter construction in the color filters, Fig. 10 is a block diagram which shows the construction of the noise estimating unit, Fig. 11 is a block diagram which shows the construction of the noise reducing unit, and Fig. 12 is a flow chart which shows the noise reduction processing that is performed by the image processing program in the computer.

In the second embodiment, parts that are the same as in the abovementioned first embodiment are labeled with the same symbols, and a description of these parts is omitted. For the most part, only the points that are different are described.

As is shown in Fig. 8, the image pickup system of the second embodiment comprises (in addition to the construction of the abovementioned first embodiment) primary color Bayer type, for example, color filters 51 that are arranged at the front of the abovementioned CCD 4, a temperature sensor 52 which is arranged in the vicinity of the abovementioned CCD 4, and which constitutes parameter calculating means used to measure the temperature of the abovementioned CCD 4 in real time, and to output the measurement results to the abovementioned control unit 16, a pre-WB unit 53 which performs a simple white balance detection on the basis of the video signal stored in the abovementioned image buffer 8, and controls the abovementioned amplifier 6 on the basis of the detection results, and a color signal separating unit 54 constituting separating means that read out the video signals stored in the abovementioned image buffer 8, separate the color signals, and output these signals to the abovementioned noise reducing unit 12 and the abovementioned noise estimating unit 13. The pre-WB unit 53 and color signal separating unit 54 are connected to the abovementioned control unit 16 bidirectionally, and are controlled by the control unit 16.

The flow of signals in the image pickup system shown in the Fig. 8 is basically similar to that in the first embodiment; only the portions that are different will be described.

When the pre-image-pickup mode is entered by half-pressing the shutter button, the subject image is picked up by the CCD 4 via the color filters 51, and the image-captured subject is output as a video signal.

The video signal is subjected to the processing described in the first embodiment, and is stored in the image buffer 8 as a digital video signal. The video signal stored in the image buffer 8 is transmitted to the abovementioned exposure control unit 9 and focus detection unit 10, and is also transmitted to the pre-WB unit 53.

The pre-WB unit 53 calculates simple white balance coefficients by multiplying each color signal by a signal with a specified brightness level in the video signal, and transmits these coefficients to the amplifier 6.

The amplifier 6 performs a white balance adjustment by multiplying each color signal by a different gain using the simple white balance coefficients received from the pre-WB unit 53.

Next, when it is detected that the shutter button has been fully pressed, a real shooting operation is performed on the basis of the exposure conditions determined by the exposure control unit 9, the focus conditions determined by the focus detection unit 10 and the white balance coefficients determined by the pre-WB unit 53, and these shooting conditions are transmitted to the control unit 16.

The video signal acquired by this real shooting operation is stored in the image buffer 8, and is then transmitted to the color signal separating unit 54 and separated into each color of the color filters.

As is described above, the filter construction of the abovementioned color filters 51 arranged at the front of the CCD 4 is, for example, a primary color Bayer type construction as shown in Fig. 9; specifically, the basic unit is 2 × 2 pixels, with green (G1, G2) filters being arranged in diagonal positions, and red (R) and blue (B) filters being arranged in the remaining diagonal positions. Furthermore, the green filters G1 and G2 are filters with the same optical characteristics; here, however, these filters are distinguished as G1 and G2 for convenience.

The color signal separating unit 54 is devised such that this unit separates the video signal inside the image buffer 8 according to these four types of color filters R, G1, G2 and B. This separating operation is performed under the control of the control unit 16 in synchronization with the processing of the noise reducing unit 12 and the processing of the noise estimating unit 13.

The respective color signals separated by the color signal separating unit 54 are transmitted to the noise estimating unit 13, where estimation of the amount of noise is performed as described above. Using the results of this estimation, noise reduction processing is performed in the noise reducing unit 12, and the respective processed color signals are synthesized and transmitted to the signal processing unit 14. The subsequent operations are the same as in the abovementioned first embodiment.

Next, one example of the construction of the noise estimating unit 13 in the present embodiment will be described with reference to Fig. 10.

The basic construction of the noise estimating unit 13 is similar to that of the noise estimating unit shown in Fig. 2 in the abovementioned first embodiment; constituent elements that have the same function are designated by the same names and labeled with the same symbols.

The noise estimating unit 13 comprises a local region extraction unit 26 which extracts a local region of a specified size in a specified position for each color signal output from the abovementioned color signal separating unit 54, a buffer 61 which stores the color signals of the local regions extracted by the abovementioned local region extraction unit 26, a gain calculating unit 29 which calculates the amount of amplification of the abovementioned amplifier 6 on the basis of information relating to the exposure conditions and information relating to the white balance coefficients transmitted from the abovementioned control unit 16, a standard value assigning unit 30 which provides standard values in cases where any of the parameters are omitted, an average and variance calculating unit 62 which reads out the signals in the abovementioned buffer 61, calculates the average value and variance value, transmits the calculated average value to the look-up table unit 63 as the signal value level of the pixel of interest, and transmits the variance value to the control unit 16 to use as a control parameter by the noise reducing unit 12, and a look-up table unit 63 constituting look-up table means which is noise amount calculating means in which the relationships between the amount of noise and the shutter speed output from the abovementioned control unit 16 or standard value assigning unit 30, information relating to the temperature of the image pickup element output from the abovementioned temperature sensor 52 or standard value assigning unit 30, amount of amplification from the abovementioned gain calculating unit 29 or standard value assigning unit 30, and signal value level output from the abovementioned average and variance calculating unit 62 or standard value assigning unit 30 are constructed by means similar to those used in the abovementioned first embodiment and recorded as a look-up table.

The amount of noise thus obtained by the look-up table unit 63 is transmitted to the noise reducing unit 12.

Furthermore, the processing of the abovementioned local region extraction unit 26 is performed in synchronization with the processing of the abovementioned noise reducing unit 12, and the processing of the noise reducing unit 12 (described later) is performed in block units; accordingly, in the present embodiment, extraction is performed while the entire image is successively scanned, for example, in units of $4 \times 4$ pixels.

Furthermore, the abovementioned control unit 16 is connected bidirectionally with the abovementioned local region extraction unit 26, average and variance calculating unit 62, gain calculating unit 29, standard value assigning unit 30 and look-up table unit 63, and controls these units.

Next, one example of the construction of the noise reducing unit 12 will be described with reference to Fig. 11.

The noise reducing unit 12 comprises a size setting unit 74 constituting control value setting means that sets the filter size on the basis of the amount of noise estimated by the abovementioned noise estimating unit 13, a local region extraction unit 71 which extracts pixel blocks corresponding to the filter size set by the abovementioned size setting unit 74 from the respective color signals output from the abovementioned color signal separating unit 54 such that these blocks encompass the pixel of interest (e. g., such that these blocks are centered on the pixel of interest), a coefficient ROM 75 constituting smoothing means in which coefficients corresponding to a preset filter size are recorded, a filtering unit 72 constituting smoothing means that reads in the coefficients of the corresponding filter size from the abovementioned coefficient ROM 75 on the basis of the filter size set by the abovementioned size setting unit 74, and perform filtering processing to apply universally known smoothing to the pixel blocks extracted by the abovementioned local region extraction unit 71, and a buffer 73 which stores the respective color signals subjected to filtering processing that are output from the abovementioned filtering unit 72 for all colors such that these signals correspond to the signal output positions of the CCD 4.

The abovementioned size setting unit 74 makes a selection from filter sizes of, for example, $1 \times 1$ pixels to $9 \times 9$ pixels in accordance with the amount of noise estimated by the noise estimating unit 13, such that a small size is selected with the amount of noise is small, and a large size is selected when the amount of noise is large. This filter size is a control value for controlling the frequency characteristics of the smoothing processing; as a result, filtering processing (smoothing processing) that reduces a specified frequency band in the video signal is performed in accordance with the frequency characteristics of the noise.

Furthermore, the abovementioned size setting unit 74 is devised such that this unit receives variance value information relating to the signal value level in the vicinity of the pixel of interest from the control unit 16, discriminates that the pixel of interest constitutes a flat region in cases where this variance value is small, and that the pixel of interest constitutes an edge region in cases where this variance value is large, and, on the basis of the discrimination results, does not perform any correction of the filter size in cases where the pixel of interest constitutes a flat region, and corrects the filter size to a smaller size in cases where the pixel of interest constitutes an edge region.

Furthermore, filtering processing is performed for all colors by repeating the abovementioned processing for each of the respective color signals, and the respective color signals stored in the buffer 73 are subsequently read out and processed by the abovementioned signal processing unit 14.

Furthermore, the abovementioned control unit 16 is connected bidirectionally to the abovementioned local region extraction unit 71, filtering unit 72 and size setting unit 74, and controls these units.

In addition, in the above description, it is assumed that processing is performed by means of hardware. However, the present invention is not limited to this; processing may also be performed by means of software.

For example, it would also be possible to devise the system such that the video signals output from the CCD 4 are taken as raw data in an unprocessed state, and such that information such as the temperature during shooting, gain, shutter speed and the like from the abovementioned control unit 16 are added to this raw data as header information. It would also be possible to output the raw data to which this header information has been added to a processing device such as a computer or the like, and to process this data by means of software in this processing device.

An example in which noise reduction processing is performed by means of an image processing program in a computer will be described with reference to Fig. 12.

When the processing is started, all color signals constituting the raw data, as well as header information such as the temperature, gain, shutter speed and the like, are first read in (step S1).

Next, the raw data is separated into respective color signals (step S2), and scanning is performed individually for each color signal (step S3).

Then, local regions of a specified size which are, for example, in units of $4 \times 4$ pixels centered on the pixel of interest are extracted (step S4).

The average value which is the signal value level of the pixel of interest, and the variance value which is used to discriminate between a flat region and an edge region, are calculated for the extracted local regions (step S5).

Next, parameters such as the temperature, gain, shutter speed and the like are determined from the header information that has been read in. Here, in cases where necessary parameters are not included in the header information, specified standard values are assigned (step S6).

The amount of noise is calculated (step S7) using the look-up table on the basis of the signal value level calculated in the abovementioned step S5 and the temperature, gain, shutter speed and the like constituting the parameters that are set in the abovementioned step S6.

Next, the filtering size is determined (step S8) on the basis of the variance value calculated in the abovementioned step S5 and the amount of noise calculated in the abovementioned step S7.

A region corresponding to the filtering size determined in the abovementioned step S8 is then extracted such that this region is centered on the pixel of interest (step S9).

Next, coefficients corresponding to the filtering size determined in the abovementioned step S8 are read in (step S10).

Smoothing filtering processing is then performed on the region extracted in the abovementioned step S9 using the filtering size determined in the abovementioned step S8 and the coefficients determined in the abovementioned step S10 (step S11).

Then, the smoothed signals are successively read out (step S12), a judgement is made as to whether or not scanning of the entire signal has been completed for one color (step S13). In cases where this scanning has not been completed, the processing returns to step S3, and the abovementioned processing is performed until the scanning is completed.

On the other hand, in cases where it is judged that the signal scanning has been completed in the abovementioned step S13, a further judgement is made as to whether or not processing has been completed for the color signals of all colors (step S14). In cases where processing has still not been completed for the color signals of all colors, the processing returns to step S2, and the abovementioned processing is performed. On the other hand, in cases where this processing has been completed, the processing is ended.

Furthermore, in the above description, a case in which the color filters 51 are primary color Bayer type filters is described as an example. However, the present invention is not limited to this. For example, it would also be possible to use the present invention in a similar manner in a case where the color filters are complementary color filters; furthermore, it would also be possible to use the present invention in the case of a two CCD or three CCD.

In the abovementioned second embodiment, an effect more or less similar to that of the abovementioned first embodiment can be obtained. Furthermore, since signals from an image pickup element that has color filters are separated into color signals for each color filter, and since the amount of noise is estimated for each pixel unit or unit area, and noise reduction processing suited to local amounts of noise is performed, optimal noise reduction can be performed from light areas to dark areas, so that a high-quality image can be obtained. Furthermore, the present invention can be used in various types of image pickup systems such as primary color or complementary color systems, and single CCD, two CCD or three CCD systems or the like.

Furthermore, since a filter size corresponding to the amount of noise is selected, and noise reduction processing is performed using this filter size, only the noise components are removed, and the remaining signal is preserved as the original signal, so that a high-quality image in which noise alone has been reduced can be obtained.

Furthermore, since the temperature of the image pickup element during shooting is directly measured in real time and used as a parameter for the estimation of the amount of noise, the amount of noise can be estimated with high precision in dynamic response to temperature variations during shooting.

In addition, since standard values are set for parameters not obtained during shooting, and the amount of noise is calculated from a look-up table together with the obtained parameters, the amount of noise can be estimated even in cases where necessary parameters cannot be obtained during shooting, so that a stable noise reduction effect can be obtained. Furthermore, since a table is used for the calculation of the amount of noise, high-speed processing is possible. Moreover, a reduction in cost and a saving of power can be achieved by intentionally omitting some of the parameter calculations.

In the present embodiment, even if factors that affect the amount of noise in a color CCD vary dynamically, the amount of noise can be appropriately reduced in response to these varying factors, so that a high-quality image can be obtained.

As is described above, the image pickup system and image processing program of the present invention make it possible to achieve an appropriate reduction of noise in the image, so that a high-quality image can be obtained.

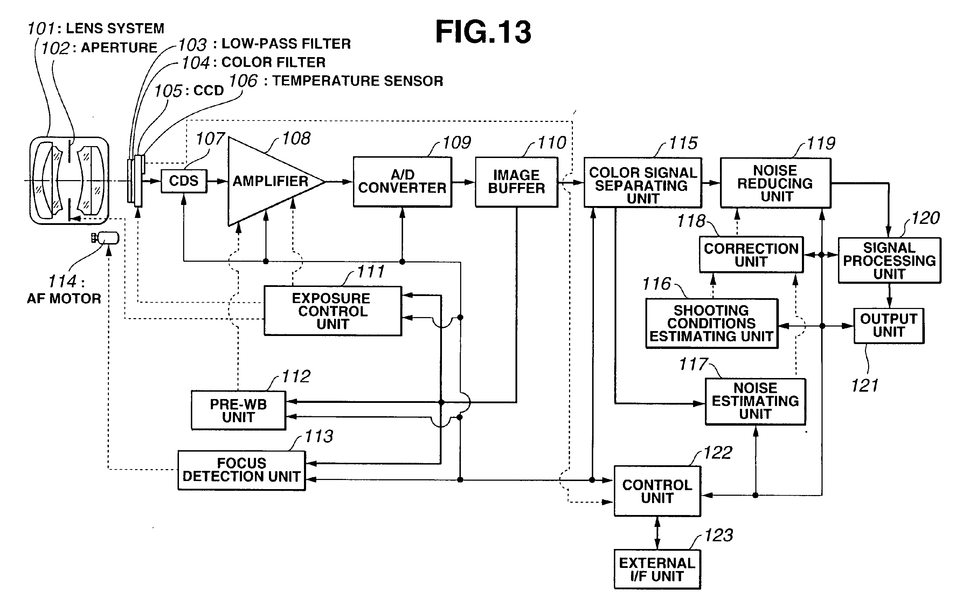

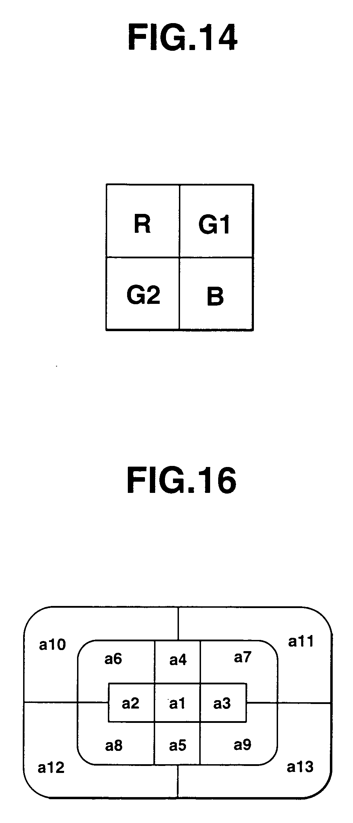

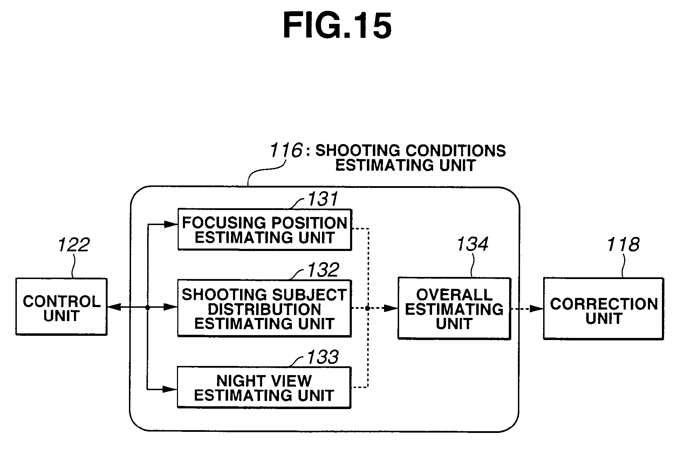

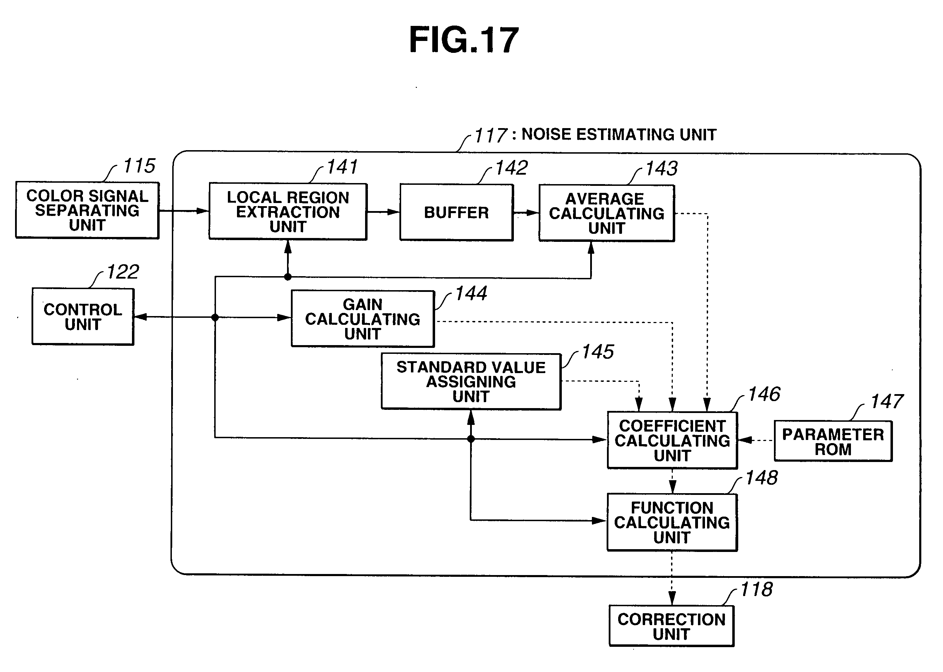

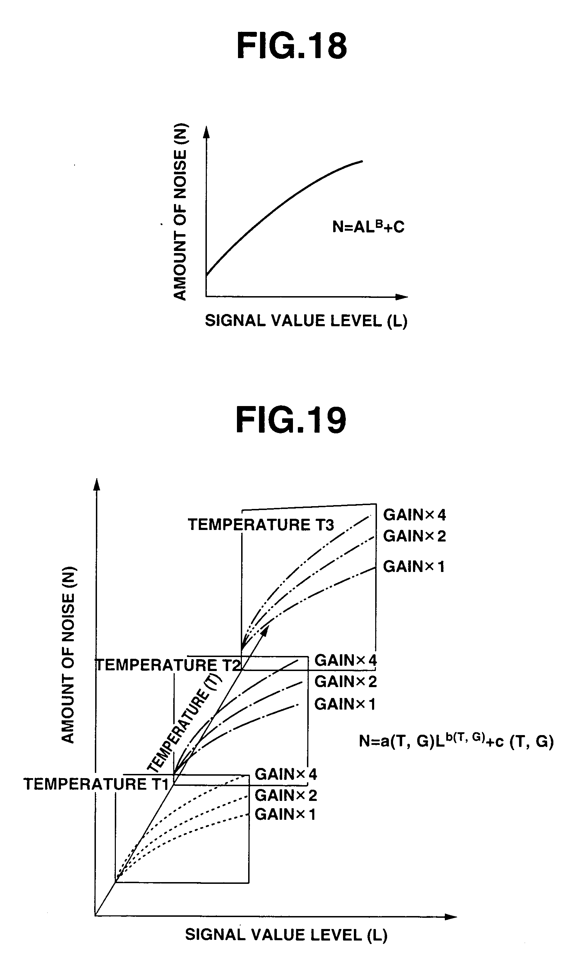

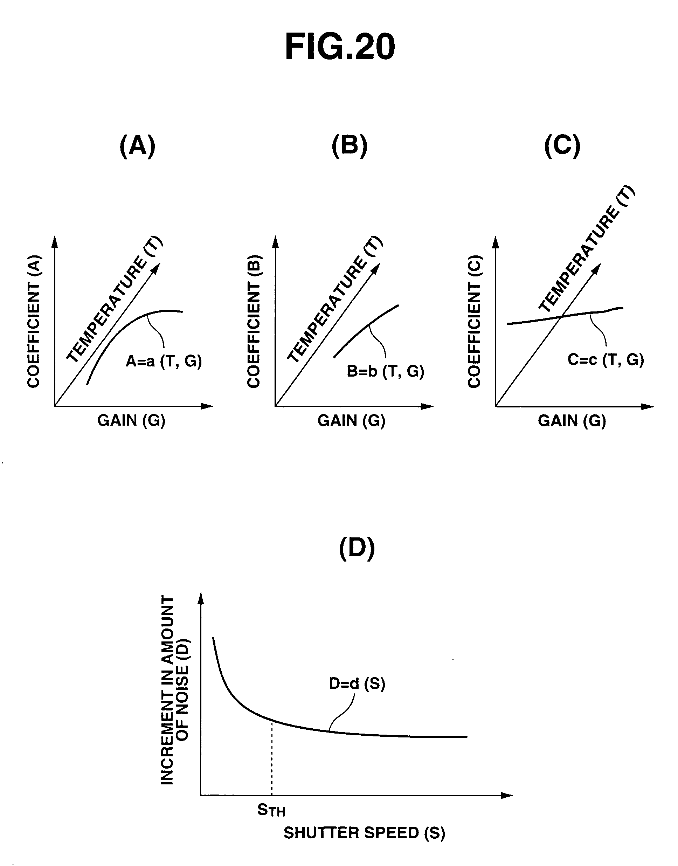

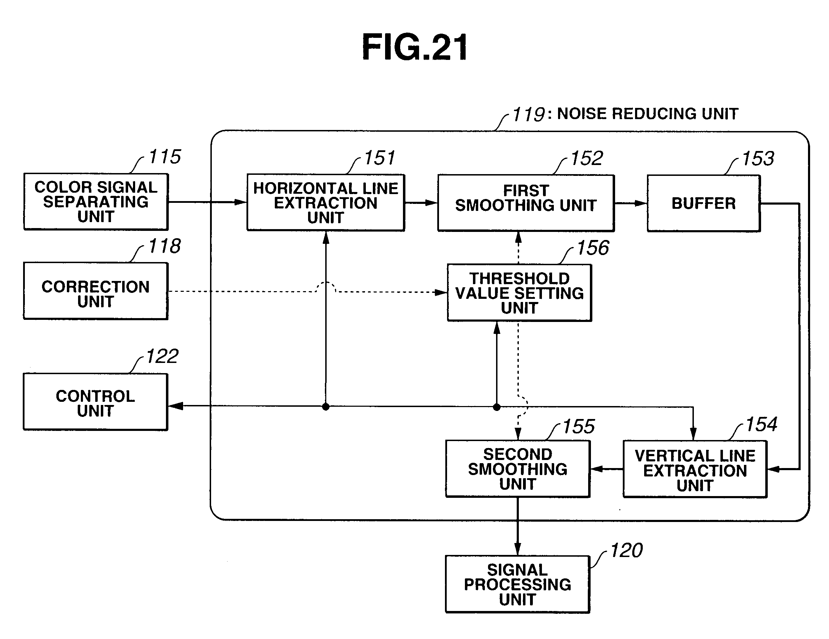

Figs. 13 through 21 show a third embodiment of the present invention. Fig. 13 is a block diagram which shows the construction of the image pickup system, Fig. 14 is a diagram which shows the primary color Bayer type filter construction in the color filters, Fig. 15 is a block diagram which shows the construction of the shooting situation estimating unit, Fig. 16 is a diagram which is used to illustrate the split pattern used for exposure controlling and the parameters used for evaluation, Fig. 17 is a block diagram which shows the construction of the noise estimating unit, Figs. 18 and 19 are diagrams which are used to illustrate the formulization of the amount of noise, Fig. 20 is diagrams which are used to illustrate the parameters used in the formulization of the amount of noise, and Fig. 21 is a block diagram which shows the construction of the noise reducing unit.

As is shown in Fig. 13, this image pickup system comprises: a lens system 101 which is used to form an image of the subject of shooting, an aperture 102 which is arranged inside the lens system 101, and which is used to regulate the transmission range of the luminous flux in the lens system 101; a low-pass filter 103 which is used to eliminate unnecessary high-frequency components from the luminous flux that is formed by the abovementioned lens system 101; primary color Bayer type color filters 104, for example, which are arranged on the surface of a CCD 105 (described later) in the light path of the luminous flux focused by the abovementioned lens system 101; a CCD 105 constituting a black and white image pickup element which subjects the optical subject image that is formed via the color filter 104 to a photoelectric conversion, and outputs an electrical video signal; a temperature sensor 106 constituting parameter calculating means which is arranged in the vicinity of the abovementioned CCD 105, and which are used to measure the temperature of the CCD 105 in real time and output the measurement results of a control unit 122 (described later); a CDS (correlated double sampling) unit 107 which performs correlated double sampling on the video signal that is output from the abovementioned CCD 105; an amplifier 108 which amplifies the signal that is output from the CDS unit 107; an A/D converter 109 which converts the analog video signal that is amplified by the abovementioned amplifier 108 into a digital signal; an image buffer 110 which temporarily stores the digital image data that is output from the abovementioned A/D converter 109; an exposure control unit 111 which performs exposure controlling relating to the subject on the basis of the image data stored in the abovementioned image buffer 110, and controls the abovementioned aperture 102, CCD 105 and amplifier 108 on the basis of the evaluation results; a pre-WB unit 112 which detects a simple white balance on the basis of the video signal stored in the abovementioned image buffer 110, and controls the abovementioned amplifier 108 on the basis of the results; a focus detection unit 113 which detects the focal point on the basis of the image data stored in the abovementioned image buffer 110, and drives an AF motor 114 (described later) on the basis of the detection results; an AF motor 114 which is controlled by the abovementioned focus detection unit 113, and which drives a focusing lens or the like contained in the abovementioned lens system 101; a color signal separating unit 115 constituting separating means which reads out the video signal stored in the abovementioned image buffer 110, and separates the color signals; a noise estimating unit 117 constituting noise estimating means which estimates noise (as will be described in detail later) on the basis of the image data that is output from the abovementioned color signal separating unit 115; a shooting situation estimating unit 116 constituting shooting situation estimating means which estimates the shooting situation; a correction unit 118 constituting correction means which uses the results of the estimation performed by the abovementioned shooting situation estimating unit 116 to correct the results of the estimation performed by the abovementioned noise estimating unit 117; a noise reducing unit 119 constituting noise reducing means which reduces the noise of the image data output from the abovementioned color signal separating unit 115 using the estimated noise corrected by the abovementioned correction unit 118; a signal processing unit 120 which processes the image data output from the abovementioned noise reducing unit 119; an output unit 121 which outputs the image data from the abovementioned signal processing unit 120 in order to record this data on, for example, a memory card or the like; an external I/F unit 123 comprising an interface to the power supply switch, shutter button, mode switches for switching various shooting modes and the like; and a control unit 122 constituting control means comprising a microcomputer or the like which is connected bidirectionally with the abovementioned CDS unit 107, amplifier 108, A/D converter 109, exposure control unit 111, pre-WB unit 112, focus detection unit 113, color signal separating unit 115, shooting situation estimating unit 116, noise estimating unit 117, correction unit 118, noise reducing unit 119, signal processing unit 120, output unit 121 and external I/F unit 123, and which comprehensively controls the abovementioned image pickup system containing these parts, and also constituting parameter calculating means.

Next, the flow of signals in the image pickup system shown in Fig. 13 will be described.

The abovementioned image pickup system is constructed such that shooting situations such as the ISO sensitivity and the like can be set via the external I/F unit 123; after these settings have been accomplished, the pre-image-pickup mode is entered by pressing the shutter button, which is a two-stage push button switch.

The video signal that is imaged by the CCD 105 and output via the abovementioned lens system 101, aperture 102, low-pass filter 103 and color filters 104 is subjected to universally known correlated double sampling in the CDS unit 107 and read out as an analog signal.

This analog signal is amplified by a specified amount by the amplifier 108, converted into a digital signal by the A/D converter 109, and transmitted to the image buffer 110.

The video signal inside the image buffer 110 is then respectively transmitted to the exposure control unit 111, the pre-WB unit 112 and the focus detection unit 113.

The exposure control unit 111 determines the brightness levels in the image, splits the image into a plurality of regions with the set ISO sensitivity, hand movement limit shutter speed and the like taken into account, calculates the appropriate exposure value by combining the brightness levels of the respective regions, and controls the stop value of the aperture 102, the electronic shutter speed of the CCD 105, the amplification factor of the amplifier 108 and the like such that this appropriate exposure value is obtained.

Furthermore, the pre-WB unit 112 calculates a simple white balance by multiplying a signal of a specified level in the video signal by each color signal, transmits the result to the amplifier 108, and achieves a white balance by multiplying this value by a gain that differs for each color signal.

Then, the focus detection unit 113 detects the edge intensity in the image, and obtains a focused image by controlling the AF motor 114 such that this edge intensity is maximized.

When preparations for the real shooting have been completed by performing this pre-image-pickup mode, and it is then detected via the external I/F unit 123 that the shutter button has been fully pressed, real shooting is performed.

This real shooting is performed on the basis of the exposure conditions determined by the exposure control unit 111, the white balance coefficients determined by the pre-WB unit 112, and the focusing conditions determined by the focus detection unit 113, and these shooting situations are transmitted to the control unit 122.

When real shooting is thus performed, the video signal is transmitted to the image buffer 110 and stored in the same manner as in pre-image-pickup.

The video signal inside the image buffer 110 is transmitted to the color signal separating unit 115, and is separated into the respective colors of the color filters.

As is described above, the filter construction of the abovementioned color filters 104 arranged on the front surface of the CCD 105 is as follows: for example, these are primary color Bayer type filters of the type shown in Fig. 14, i. e., filters in which the basic unit is $2 \times 2$ pixels, with green (G1 and G2) filters arranged in diagonal positions, and red (R) and blue (B) filters arranged in the remaining diagonal positions. Furthermore, the green filters G1 and G2 are filter with the same optical characteristics; here, however, these filters are distinguished as G1 and G2 for convenience of processing.

The color signal separating unit 115 separates the video signal inside the image buffer 110 in accordance with these four types of color filters R, G1, G2 and B, and this separating operation is performed in synchronization with the processing of the noise estimating unit 117 and the processing of the noise reducing unit 119 under the control of the control unit 122.

Meanwhile, the control unit 122 transmits exposure information and focus information at the time of image pickup from the exposure control unit 111, pre-WB unit 112 and focus detection unit 113 to the shooting situation estimating unit 116.

On the basis of this transmitted information, the shooting situation estimating unit 116 estimates the shooting situation for the entire signal, e. g., scenery shooting, portrait shooting, close-up shooting, night view shooting or the like, and transmits this shooting situation to the correction unit 118. Such estimation processing of the shooting situation by the shooting situation estimating unit 116 is performed once for each shooting operation.

Next, the noise estimating unit 117 reads in the respective color signals from the color signal separating unit 115 under the control of the control unit 122; furthermore, shooting situations such as the exposure conditions determined by the exposure control unit 111, the ISO sensitivity set by the external I/F unit 123 and the like are also transmitted to the noise estimating unit 117 via the control unit 122.

On the basis of the abovementioned information and respective color signals, the noise estimating unit 117 calculates the amount of noise for each specified size, e. g., for each pixel (in pixel units) in the present embodiment, and transmits the calculated amount of noise to the correction unit 118.

On the basis of the shooting situation output from the shooting situation estimating unit 116, the correction unit 118 corrects the amount of noise output from the noise estimating unit 117; then, the correction unit 118 transmits the corrected amount of noise to the noise reducing unit 119.

In this case, the processing in the abovementioned noise estimating unit 117 and the processing in the correction unit 118 are performed in synchronization with the processing of the noise reducing unit 119 under the control of the control unit 122.

On the basis of the amount of noise corrected by the correction unit 118, the noise reducing unit 119 performs noise reduction processing on the respective color signals from the color signal separating unit 115, and transmits the processed video signal to the signal processing unit 120.

Under the control of the control unit 122, the signal processing unit 120 performs universally known emphasis processing, compression processing and the like on the video signal that has been subjected to noise reduction, and transmits the processed video signal to the output unit 121.

The output unit 121 records and stores the received video signal on a memory card or the like.

Next, one example of the construction of the shooting situation estimating unit 116 will be described with reference to Fig. 15.

The shooting situation estimating unit 116 comprises: a focusing position estimating unit 131 constituting focusing position estimating means that acquires the AF information set by the abovementioned focus detection unit 113 from the control unit 122, and classify this information into, for example, 5 m to infinity (scenery shooting), 1 m to 5 m (portrait shooting), 1 m and less (close-up shooting) or the like; a shooting-subject distribution estimating unit 132 constituting shooting-subject distribution estimating means that acquires the split photometrical results of the abovementioned exposure control unit 111 from the control unit 122 and calculates evaluation parameters S1 through S3 (described later); a night view estimating unit 133 which acquires AE information from the abovementioned exposure control unit 111 via the control unit 122, and estimates that the shooting situation is night view shooting in cases where the exposure time is longer than a specified shutter speed, and the average brightness level for the overall signal is equal to or less than a specified threshold value; and an overall estimating unit 134 constituting overall estimating means that determines the gain used to perform a correction for the amount of noise on the basis of the results of the classification performed by the abovementioned focusing position estimating unit 131, the results of the estimation performed by the abovementioned shooting-subject distribution estimating unit 132 and the results of the estimation performed by the abovementioned night view estimating unit 133, and transfers the gain thus determined to the correction unit 118.

Furthermore, the abovementioned focusing position estimating unit 131, shooting-subject distribution estimating unit 132 and night view estimating unit 133 are connected bidirectionally with the control unit 122.

For example, as is shown in Fig. 16, the abovementioned exposure control unit 111 splits the signal from the CCD 105 into 13 regions, and performs universally known split photometry.

In the example shown in the figures, the image pickup region of the CCD 105 is classified into a centermost portion, an inner peripheral portion that surrounds this centermost portion, and an outer peripheral portion that surrounds this inner peripheral portion. Furthermore, these portions are further divided into regions as described below.

Specifically, the centermost portion is divided into a middle region (with an average brightness level indicated by a1), a region adjacent to this middle region on the left (with an average brightness level indicated by a2), and a region adjacent to this middle region on the right (with an average brightness level indicated by a3).

Furthermore, the inner peripheral portion is divided into regions (with average brightness levels respectively indicated by a4 and a5) above and below the region with an average brightness level of a1, regions (with average brightness levels respectively indicated by a6 and a7) located to the left and right of the region with an average brightness level of a4, and regions (with average brightness levels respectively indicated by a8 and a9) located to the left and right of the region with an average brightness level of a5.

Furthermore, the outer peripheral portion is divided into an upper left region (with an average brightness level indicated by a10), an upper right region (with an average brightness level indicated by a11), a lower left region (with an average brightness level indicated by a12), and a lower right region (with an average brightness level indicated by a13).

The average brightness levels of the respective regions produced by such a division are transmitted to the shooting-subject distribution estimating unit 132 from the exposure control unit 111.

In the split photometry using such regions, the abovementioned shooting-subject distribution estimating unit 132 calculates the respective evaluation parameters shown below as shown in the following equation 11, equation 12 and equation 13, and transmits the results of these calculations to the overall estimating unit 134.

$$S1 = |a2-a3| \tag{11}$$

$$S2 = \max(|a4-a6|, |a4-a7|) \tag{12}$$

$$S3 = \max(a10, a11)-Av \tag{13}$$

where

$$Av = (\Sigma ai) / 13$$

Here, max() is a function which gives the maximum value of the number in parentheses, $\Sigma$ indicates the sum for all i (i. e., i = 1 to 13), and Av indicates the average brightness level for all of the photometrical regions (the average brightness level for the overall signal).

Thus, the evaluation parameter S1 indicates the left-right brightness difference of the centermost portion (central portion), the evaluation parameter S2 indicates the larger of the brightness differences between the upper side center and upper side left or between the upper side center and upper side right of the inner peripheral portion (central emphasis), and the evaluation parameter S3 indicates the difference between the average brightness of the overall signal and whichever is larger of the upper side left and the upper side right of the outer peripheral portion (overall signal).

As is described above, the abovementioned overall estimating unit 134 determines the gain that is used to correct the amount of noise in accordance with the respective outputs of the abovementioned focusing position estimating unit 131, the shooting-subject distribution estimating unit 132 and the abovementioned night view estimating unit 133. Here, in cases where the estimation results from the night view estimating unit 133 indicate night view shooting, "strong", e. g., a value of 1.5 to 2.0, is designated as the gain; this gain is immediately sent to the correction unit 118, and the processing is ended.

On the other hand, in cases where it is estimated that the shooting is not night view shooting, the overall estimating unit 134 estimates the shooting situation and determines the gain as shown in Table 1 using the classification results from the focusing position estimating unit 131, and the evaluation parameters S1 through S3 from the shooting-subject distribution estimating unit 132.

Table 1

| AF INFORMATION | AE INFORMATION | SHOOTING SCENE | GAIN |
|---|---|---|---|
| 5 m ~ ∞ | S3 > Th1 | SCENERY WITH SKY IN UPPER PART | STRONG |
| | S3 < Th1 | SCENERY WITH NO (OR LITTLE) SKY IN UPPER PART | MEDIUM |
| 1 m ~ 5 m | S2 > Th2 | PORTRAIT OF ONE PERSON | MEDIUM |
| | S2 < Th2 | PLURALITY OF PORTRAITS | STRONG |
| 1 m OR LESS | S1 > Th3 | CLOSE-UP OF PLURALITY OF OBJECTS | WEAK |
| | S1 < Th3 | CLOSE-UP OF SINGLE OBJECT | MEDIUM |

As is shown in Table 1, when the AF information is 5 m to infinity, the shooting subject is considered to be scenery, and the abovementioned evaluation parameter S3 is further compared with a specified value Th1. In this case, if the evaluation parameter S3 is larger than the specified value Th1, at least one of the values a10 or a11 shows a brightness that is higher by at least a certain amount than the average brightness of the overall signal; accordingly, it is estimated that the shooting involves scenery with sky in the upper part. Since the sky is flat and this is a region where noise components are subjectively a problem, a "strong" gain (e. g., 1.5 to 2.0) is designated as the gain used for correction. On the other hand, in cases where the evaluation parameter S3 is smaller than the specified value Th1, it is conversely estimated that the shooting situation is scenery with no sky (or a little sky) in the upper part. In this case, it appears that the main shooting subject is an object with a texture structure such as plants, buildings or the like; accordingly, a "medium" gain (e. g., 1.0 to 1.5) is designated as the gain used for correction.

Next, in cases where the AF information is 1 m to 5 m, it is assumed that the shooting is for portrait, and the abovementioned evaluation parameter S2 is further compared with a specified value Th2. In this case, if the evaluation parameter S2 is larger than the specified value Th2, there is a brightness difference between the upper side center a4 of the inner peripheral portion and either the upper side left or right a6 or a7 of the inner peripheral portion; accordingly, it is estimated that the shooting situation is in portrait shooting of a single person. In the case of portrait shooting of a single person, the area of the face, i. e., the area which is flat and in which noise tends to be conspicuous, is relatively large. Accordingly, while it is desirable on the one hand to strengthen the gain used for correction, hair which has a fine structure is also present; accordingly, if this hair is solid, this will be evaluated as a deterioration in the image quality. Consequently, a "medium" gain is designated as the gain used for correction. On the other hand, in cases where the evaluation parameter S2 is smaller than the specified value Th2, it is estimated that the shooting situation is for portrait of a plurality of persons. In the case of portrait shooting of a plurality of persons, the area of the faces is relatively small, and the fine structure of the hair is difficult to distinguish. Accordingly, a "strong" gain is designated as the gain used for correction.

Furthermore, in cases where the AF information is 1 m or less, it is judged that the shooting is for close-up, and the abovementioned evaluation parameter S1 is further compared with a specified value Th3. In this case, if the evaluation parameter S1 is larger than the specified value Th3, there is a brightness difference between the left and right of the centermost portion, and it is estimated that the shooting situation is for close-up of a plurality of objects. In this case, it would appear that there is fine structure in the principle objects of shooting; accordingly, a "weak" gain (e. g., 0.5 to 1.0) is designated as the gain used for correction. On the other hand, in cases where the evaluation parameter S1 is smaller than the specified value Th3, it is estimated that the shooting situation is for close-up of a single object. In this case, it is difficult to judge the presence or absence of fine structure; accordingly, all-purpose characteristics are taken into account, and a "medium" gain is designated as the gain used for correction.

The gain used for correction that has thus been set by the overall estimating unit 134 is transmitted to the correction unit 118 as described above.

Next, one example of the construction of the noise estimating unit 117 will be described with reference to Fig. 17.

The noise estimating unit 117 comprises: a local region extraction unit 141 which extracts local regions of a specified size in specified positions in each color signal that is output from the abovementioned color signal separating unit 115; a buffer 142 which stores the color signals of the local regions extracted by the local region extraction unit 141; a gain calculating unit 144 constituting parameter calculating means that calculates the amount of amplification of the abovementioned amplifier 108 on the basis of information relating to the exposure conditions and information relating to the white balance coefficients transmitted from the abovementioned control unit 122; a standard value assigning unit 145 constituting assigning means that assigns standard values in cases where any of the parameters are omitted; an average calculating unit 143 constituting parameter calculating means that reads out the signals of the local regions stored in the abovementioned buffer 142, calculates average values and transmits these values to a coefficient calculating unit 146 as signal value levels; a parameter ROM 147 constituting coefficient calculating means that stores parameters relating to functions (described later) that are used to estimate the amount of noise; a coefficient calculating unit 146 serving as coefficient calculating means as well as noise amount calculating means that calculates coefficients involved in specified equations that are used to estimate the amount of noise of pixels of interest on the basis of the parameters that are read out from the abovementioned parameter ROM 147, information relating to the temperature of the image pickup element that is output from the temperature sensor 106 or standard value assigning unit 145 via the abovementioned control unit 122, signal value levels that are output from the abovementioned average calculating unit 143 or the abovementioned standard value assigning unit 145, the amount of amplification that is output from the abovementioned gain calculating unit 144 or the abovementioned standard value assigning unit 145, and information relating to the shutter speed that is output from the abovementioned control unit 122 or the abovementioned standard value assigning unit 145; and a function calculating unit 148 serving as function calculating means as well as noise amount calculating means that calculates the amount of noise using functions that are formulized (as will be described later) using the coefficients that are output from the abovementioned coefficient calculating unit 146 and transfers the amount of noise thus calculated to the correction unit 118.

In the present embodiment, since the processing of the noise reducing unit 119 (described later) is separated into the horizontal direction and vertical direction, the abovementioned local region extraction unit 141 is devised such that this unit performs extraction while successively scanning the entire image in, for example, 4 × 1 size units in the case of horizontal direction processing, and, for example, 1 × 4 size units in the case of vertical direction processing. The processing performed by this local region extraction unit 141 is performed in synchronization with the processing of the noise reducing unit 119.

Furthermore, the abovementioned control unit 122 is connected bidirectionally with the abovementioned local region extraction unit 141, average calculating unit 143, gain calculating unit 144, standard value assigning unit 145, coefficient calculating unit 146, and function calculating unit 148, and controls these units.

Next, the formulization of the amount of noise that is used when the coefficient calculating unit 146 estimates the amount of noise for pixels of interest will be described with reference to Fig. 19.

The function of the amount of noise N with respect to the signal value level L is formulized as indicated in equation 14 below.

$$N = AL^B + C \tag{14}$$

Here, A, B and C are constant terms, and the constant terms are added to a function that forms a power of the signal value level L.

When the outline of this function is plotted in a cases where (for example) $A > 0$, $0 < B < 1$ and $C > 0$, the shape shown in Fig. 18 is obtained.

However, the amount of noise N does not depend on the signal value level L alone, but also varies according to the temperature of the CCD 105 which is the image pickup element and the gain of the amplifier 108. Accordingly, Fig. 19 shows an example in which these factors are also taken into account.

Specifically, as is shown in equation 15, a(T, G), b(T, G) and c(T, G) which use the temperature T and gain G as parameters, are introduced instead of A, B and C, which were constant terms on the abovementioned equation 14.

$$N = a(T, G)L^{b(T, G)} + c(T, G) \tag{15}$$

Fig. 19 shows the curves indicated by this equation 15 plotted for a plurality of gains G (1, 2 and 4 times in the example shown in the figures) at a plurality of temperatures T (temperatures T1 through T3 in the example shown in the figures).

In Fig. 19, the independent variable is shown as the signal value level L, and the dependent variable is shown as the amount of noise N. The temperature T which constitutes a parameter is plotted on a coordinate axis in a direction that is perpendicular to these variables. Accordingly, the amount of noise N according to the signal value level L is respectively read within the plane expressed by T = T1, within the plane expressed by T = T2, and within the plane expressed by T = T3. In this case, furthermore, the curve shape of the gain G, which is a parameter, is expressed by drawing a plurality of curves within the respective planes.

The individual curves indicated by the respective parameters show configurations that are more or less similar to the curves produced by equation 14 shown in Fig. 18; however, the respective coefficients a, b and c naturally differ according to the respective values of the temperature T and gain G.

Fig. 20A shows an outline of the characteristics of the abovementioned function a(T, G), Fig. 20B shows an outline of the characteristics of the abovementioned function b(T, G), and Fig. 20C shows an outline of the characteristics of the abovementioned function c(T, G).

Since these respective functions are two-variable functions with the temperature T and gain G as independent variables, Figs. 20A through 20C are plotted as three-dimensional coordinates, and show curved surfaces in these plotted spaces. Here, however, instead of showing concrete curved shapes, the conditions of major changes in the characteristics are shown using curved lines.

The respective constant terms A, B and C are output by inputting the temperature T and gain G into such functions a, b and c as parameters. Furthermore, the concrete shapes of these functions can easily be acquired by measuring the characteristics of the image pickup element system including the CCD 105 and amplifier 108 beforehand.

Random noise shows a tendency to increase as the exposure time becomes longer. As a result, if the combination of shutter speed and stop value differs, there may be a difference in the amount of noise that is generated, even if the amount of exposure is the same. Accordingly, an example in which correction is performed with such differences also being taken into account will be described with reference to Fig. 20D.

Here, a correction coefficient d(S) which gives the constant term D is introduced with the shutter speed S as a parameter, and a correction based on the formulization shown in equation 16 is performed by means that multiplies this correction coefficient by equation 15.

$$N = \{a(T, G)L^{b(T, G)} + c(T, G)\}d(S) = (AL^B + C)D \tag{16}$$

The function shape of this correction coefficient d(S) is obtained by measuring the characteristics of the image pickup element system beforehand; for example, this function shows the shape indicated in Fig. 20D. Fig. 20D shows the conditions of the increment D in the amount of noise relative to the shutter speed S.

As is shown in the Fig. 20D, the increment D in the amount of noise has the property of increasing abruptly when the shutter speed S is smaller than a certain threshold value $S_{TH}$ (i. e., when the exposure time is long). Accordingly, the system is divided into two procedures depending on whether or not the shutter speed S is equal to or greater than this threshold value $S_{TH}$. In the case of a long exposure, the function d(S) is used; however, in the case of a short exposure, the system may be simplified by using fixed coefficients.

The four functions a(T, G), b(T, G), c(T, G) and d(S) described above are recorded in the abovementioned parameter ROM 147. Furthermore, the correction for the shutter speed need not necessarily be prepared as a function; it would also be possible to prepare this correction by some other means, e. g., as a table or the like.

The coefficient calculating unit 146 calculates the respective fixed terms A, B, C and D using the four functions recorded in the parameter ROM 147, with the temperature T, gain G and shutter speed S acquired dynamically (or acquired from the standard value assigning unit 145) as input parameters, and transmits these constant terms to the function calculating unit 148.

The function calculating unit 148 determines the function shape used to calculate the amount of noise N by applying the respective constant terms A, B, C and D calculated by the abovementioned coefficient calculating unit 146 to the abovementioned equation 16, and calculates the amount of noise N by means of the signal value level L output from the abovementioned average calculating unit 143 via the abovementioned coefficient calculating unit 146.

In this case, the respective parameters such as the temperature T, gain G, shutter speed S and the like need not always be determined for each shooting operation. It is also possible to construct the system such that arbitrary parameters are stored in the standard value assigning unit 145, and calculation processing is omitted. As a result, it is possible to achieve an increase in the processing speed, a saving of power and the like.

When the abovementioned correction unit 118 receives the amount of noise from the noise estimating unit 117 that has been calculated as described above, the correction unit 118 multiplies this amount of noise by the correction gain that has been transmitted from the abovementioned shooting situation estimating unit 116 under the control of the control unit 122, and transmits the results to the noise reducing unit 119.

Next, one example of the construction of the noise reducing unit 119 will be described with reference to Fig. 21.

The noise reducing unit 119 comprises: a horizontal line extraction unit 151 which successively extracts video signals in horizontal line units for each video signal that is output from the abovementioned color signal separating unit 115; a first smoothing unit 152 constituting smoothing means which scans in pixel units the horizontal line video signals extracted by the abovementioned horizontal line extraction unit 151, and performs universally known hysteresis smoothing with the threshold value from a threshold value setting unit 156 (described later) as the amount of noise; a buffer 153 which stores the video signals of one screen for all colors by successively storing the horizontal lines smoothed by the abovementioned first smoothing unit 152; a vertical line extraction unit 154 which successively extracts video signal for each color signal in vertical line units from the abovementioned buffer 153 after video signals for one screen have been accumulated for all colors in this buffer 153; a second smoothing unit 155 constituting smooth means which successively scans in pixel units the vertical line video signals extracted by the abovementioned vertical line extraction unit 154, performs universally known hysteresis smoothing with the threshold value from a threshold value setting unit 156 (described later) as the amount of noise, and successively outputs the smoothed signals to the abovementioned signal processing unit 120; and a threshold value setting unit 156 constituting threshold value setting means which acquires the amount of noise corrected by the abovementioned correction unit 118 in pixel units in accordance with the horizontal lines extracted by the abovementioned horizontal line extraction unit 151 or the vertical lines extracted by the abovementioned vertical line extraction unit 154, sets the amplitude value of the noise as a threshold value, very small amplitude value, and outputs this threshold value to the abovementioned first smoothing unit 152 or the abovementioned second smoothing unit 155.

Here, the hysteresis smoothing performed by the abovementioned first and second smoothing units 152 and 155 is performed in synchronization with the operation of the correction unit 118 and the operation of the threshold value setting unit 156 under the control of the control unit 122.

Furthermore, the abovementioned control unit 122 is connected bidirectionally with the abovementioned horizontal line extraction unit 151, vertical line extraction unit 154 and threshold value setting unit 156, and controls these units.

Furthermore, in the above description, the amount of noise is estimated in pixel units. However, the present invention is not limited to this; it would also be possible to devise the system such that the amount of noise is estimated for each arbitrary specified unit area such as $2 \times 2$ pixels, $4 \times 4$ pixels or the like. In this case, the precision of noise estimation drops; on the other hand, however, this offers the advantage of allowing high-speed processing.

Furthermore, in the above description, a single CCD in which the color filters 104 were primary color Bayer type filters was described as an example. However, the present invention is not limited to this; for example, the present invention can also be similarly applied to a single CCD in which the color filters 104 are complementary color filters. Furthermore, the present invention can also be similarly applied in the case of a two CCD or three CCD.

Furthermore, in the above description, focus information and exposure information are used to estimate the shooting situation. However, the present invention is not limited to this; it would also be possible to estimate the shooting situation using at least one type of information selected among zoom position information, eye sensing information, strobe light emission information and the like, or to estimate the shooting situation more precisely by appropriately combining such information.

In this third embodiment, the amount of noise is estimated for each region of the image and for each color signal; accordingly, appropriate noise reduction can be accomplished in light areas and dark areas, so that a high-quality image can be obtained.

Furthermore, various types of parameters such as the signal value level relating to the amount of noise, the temperature of the image pickup element during shooting, the shutter speed, the gain and the like are determined dynamically for each shooting operation, and the amount of noise is calculated on the basis of these parameters; accordingly, the amount of noise can be calculated with high precision. In this case, the precision can be increased even further by estimating the amount of noise in pixel units.

Furthermore, since the shooting situation is determined and the estimated amount of noise is corrected, images with subjectively desirable high quality can be obtained. In this case, the shooting situation of the overall image is determined by synthesizing various types of information during shooting; accordingly, a low cost and high-speed processing can be realized.

By using focus information, exposure information and the like to determine the shooting situation, it is possible to estimate whether or not the shooting is for night scene, and to estimate the category, i. e., close-up, portrait, scenery or the like, into which the shooting is to be classified.

Furthermore, since signals from an image pickup element that has color filters are separated into color signals for each color filter, it is possible to accomplish noise reduction in diverse image pickup systems, e. g., primary color systems or complementary color systems, and single CCD, two CCD or three CCD systems.

Furthermore, since the amount of noise is set as a threshold value, and signals below this threshold value are eliminated as noise, signals above this threshold value are preserved as original signals, so that a high-quality image in which only the noise components are reduced can be obtained.

Furthermore, since standard values are set for parameters that could not be obtained at the time of shooting, and since the coefficients used to calculate the amount of noise are determined using these standard values together with the parameters that are obtained, and the amount of noise is calculated from these coefficients, the amount of noise can be estimated and a stable noise reducing effect can be obtained even in cases where necessary parameters cannot be obtained at the time of shooting. In this case, since functions are used to calculate the amount of noise, the amount of memory that is required can be reduced, so that the cost can be reduced. In addition, an image pickup system in which the cost is reduced and power is saved can be constructed by deliberately omitting some of the parameter calculations.

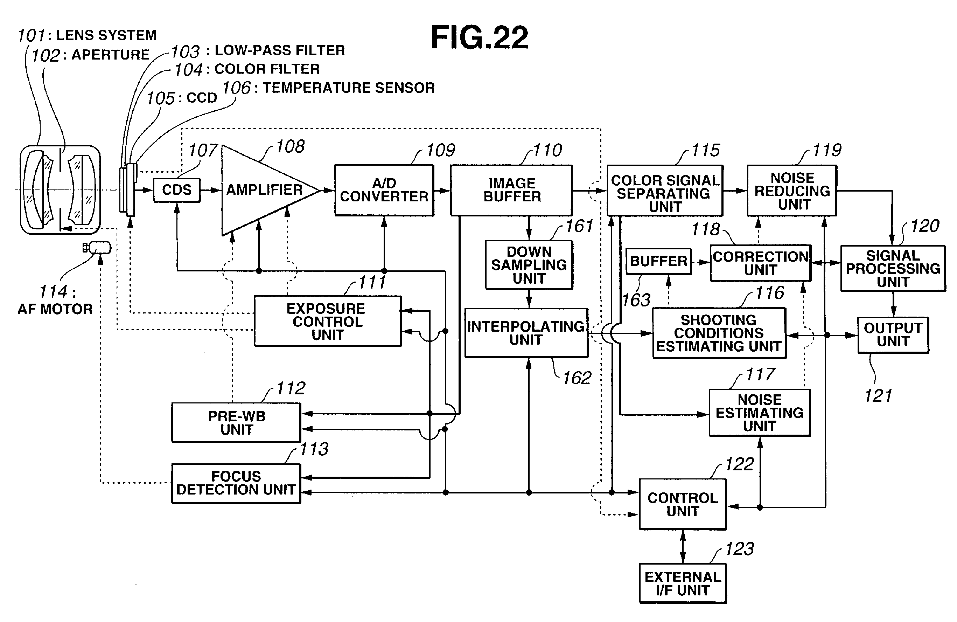

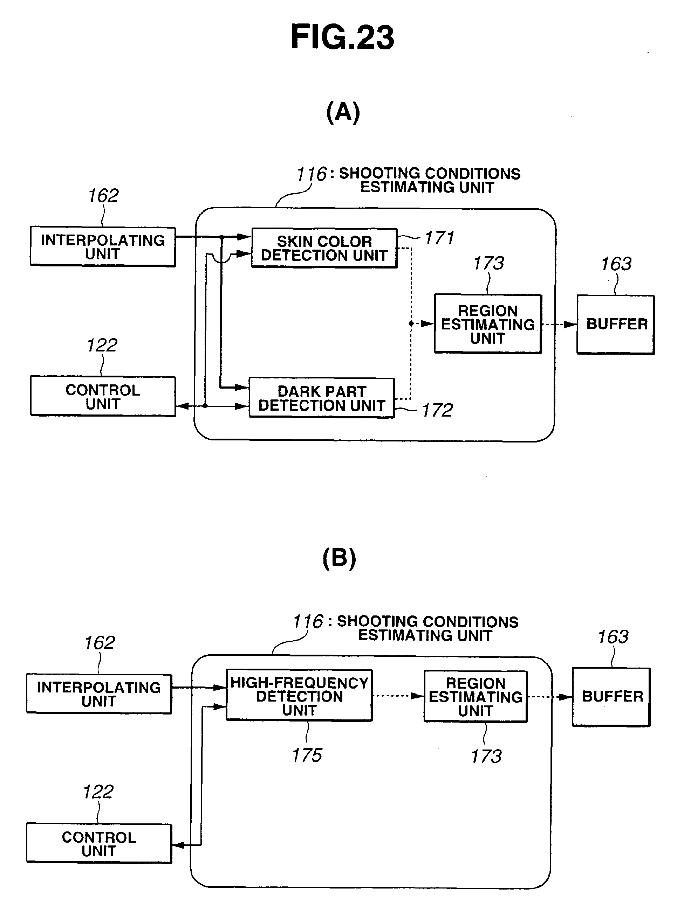

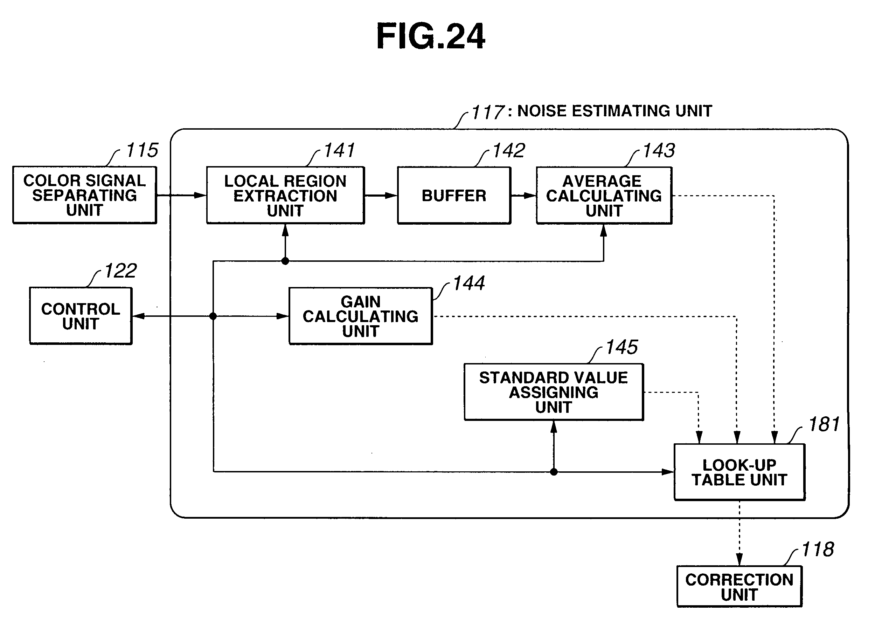

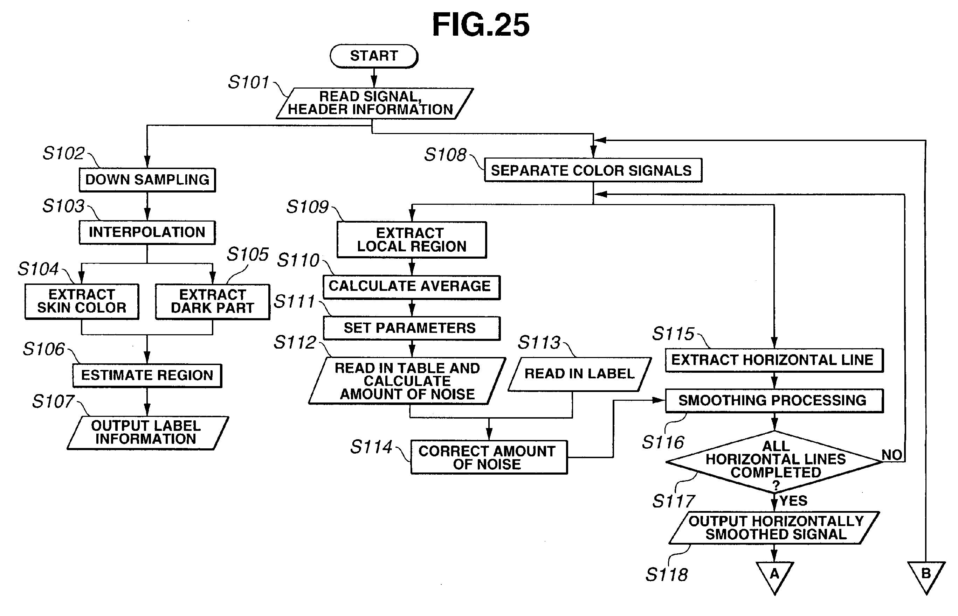

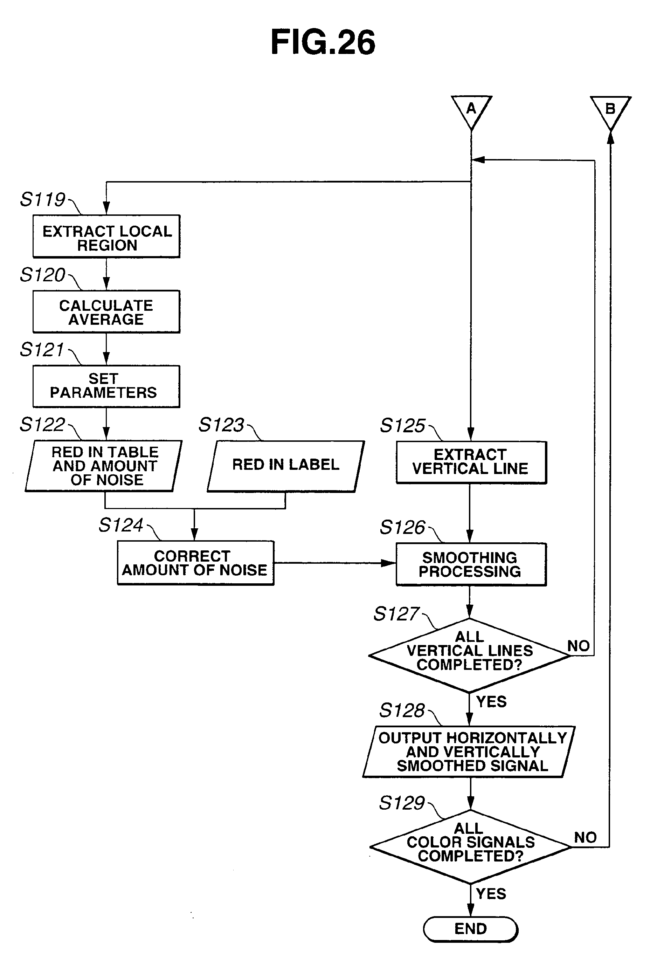

Figs. 22 through 26 show a fourth embodiment of the present invention. Fig. 22 is a block diagram which shows the construction of the image pickup system, Fig. 23 is block diagrams which show examples of the construction of the shooting situation estimation unit, Fig. 24 is a block diagram which shows the construction of the noise estimating unit, Fig. 25 is a flow chart which shows a portion of the noise reduction processing that is performed by the image processing program in a computer, and Fig. 26 is a flow chart which shows a portion of the noise reduction processing that is performed by the image processing program in a computer.

In this fourth embodiment, parts that are the same as in the abovementioned thrid embodiment are labeled with the same symbols, and a description of such parts is omitted. For the most part, only points that are different will be described.

As is shown in Fig. 22, in addition to the construction of the abovementioned third embodiment, the image pickup system of this fourth embodiment comprises: a down sampling unit 161 comprising down sampling means which thins the video signals read out form the abovementioned image buffer 110 at a specified interval; an interpolating unit 162 which performs universally known linear interpolation processing on the video signals down sampled by the abovementioned down sampling unit 161, thus producing an RGB three CCD image, and outputs the result to the abovementioned shooting situation estimating unit 116; and a buffer 163 which temporarily stores the information for the labeled image regions estimated by the abovementioned shooting situation estimating unit 116, and outputs this information to the abovementioned correction unit 118. The abovementioned interpolating unit 162 is connected bidirectionally with the abovementioned control unit 122, and is controlled by the control unit 122.

The flow of signals in the image pickup system shown in Fig. 22 is basically the same as in the abovementioned third embodiment; only portions that are different will be described.

When it is detected via the external I/F unit 123 that the shutter button has been fully pressed, real shooting is performed as described above, and a video signal is transmitted to the image buffer 110.

The down sampling unit 161 reads out the video signal inside the image buffer 110, thins this signal at a specified interval, and transmits the signal to the interpolating unit 162. Since Bayer type color filters are premised to be the color filters 104 in the present embodiment, the down sampling processing performed by the down sampling unit 161 is performed with $2 \times 2$ pixels as the basic unit. In concrete terms, for example, down sampling which reads in only the upper left $2 \times 2$ pixels for $16 \times 16$ pixel units is performed. As a result of such down sampling processing being performed, the video signal is reduced to a size of $(1/8) \times (1/8)$, i. e., a data size of 1/64.

The interpolating unit 162 produces an RGB three CCD image by performing universally known linear interpolation processing on the video signal that has been sampled down by the abovementioned down sampling unit 161, and transmits the video signal of the three CCD image thus produced to the shooting situation estimating unit 116.

The shooting situation estimating unit 116 calculates information relating to skin color, dark portions, high-frequency regions and the like from the video image converted into a three CCD image that is transmitted from the interpolating unit 162, divides the shooting image into a plurality of regions on the basis of the calculated information, and labels the information for the respective regions.

The buffer 163 stores the information transmitted from the shooting situation estimating unit 116.

Under the control of the control unit 122, the noise estimating unit 117 calculates the amount of noise for the respective color signals received from the color signal separating unit 115 for each specified size, e. g., in pixel units in the present embodiment, and transmits the calculated amount of noise to the correction unit 118.

On the basis of the label information read out from the abovementioned buffer 163, the correction unit 118 corrects the amount of noise that is output from the noise estimating unit 117, and transmits the corrected amount of noise to the noise reducing unit 119. In this case, correction unit 118 subjects the label information of the buffer 163 to expansion processing in accordance with the proportion of down sampling performed by the down sampling unit 161, and performs processing corresponding to the amount of nose in pixel units from the noise estimating unit 117.

Under the control of the control unit 122, the processing in the abovementioned noise estimating unit 117 and the processing in the correction unit 118 are performed in synchronization with the processing of the noise reducing unit 119.

The subsequent processing performed in the noise reducing unit 119, signal processing unit 120 and output unit 121 is the same as in the abovementioned third embodiment.

Next, one example of the construction of the shooting situation estimating unit 116 will be described with reference to Fig. 23A.

The shooting situation estimating unit 116 comprises: a skin color detection unit 171 constituting specific color detection means which is image characteristic detection means that reads out RGB three CCD images from the abovementioned interpolating unit 162, calculates color difference signals Cb and Cr, extracts skin color regions by specified threshold value processing, and applies labels; a dark area detection unit 172 constituting specific brightness detection means which is image characteristic detection means that reads out RGB three CCD images from the abovementioned interpolating unit 162, calculates a brightness signal Y, extracts dark regions which are smaller than a specified threshold value, and applies labels; and a region estimating unit 173 constituting region estimating means that transmits region estimation results, which are derived on the basis of information from the abovementioned skin color detection unit 171 and information from the dark area detection unit 172 and indicate whether or not certain regions are skin color regions and whether or not these regions are dark regions, to the abovementioned buffer 163.

Furthermore, the abovementioned control unit 122 is connected bidirectionally with the abovementioned skin color detection unit 171 and dark area detection unit 172, and controls these units.

When an RGB three CCD image is read out from the interpolating unit 162, the abovementioned skin color detection unit 171 converts this image into signals of specific color spaces, e. g., color difference signals Cb and Cr in Y, Cb and Cr spaces, as shown in equation 17 and equation 18 below.

$$Cb = -0.16874R - 0.33126G + 0.50000B \tag{17}$$

$$Cr = 0.50000R - 0.41869G - 0.08131B \tag{18}$$

Then, the skin color detection unit 171 extracts only skin color regions by comparing these two color difference signals Cb and Cr with a specified threshold value.

Furthermore, using these results, the skin color detection unit 171 labels the down sampled three CCD image in pixel units, and transmits this image to the region estimating unit 173. In regard to the concrete labels that are applied in this case, for example, 1 is applied to skin color regions, and 0 is applied to other regions.

Next, when an RGB three CCD image is read out from the interpolating unit 162, the abovementioned dark area detection unit 172 converts this into a brightness signal as shown in the following equation 19.

$$Y = 0.29900R + 0.58700G + 0.11400B \qquad (19)$$

Furthermore, the dark area detection unit 172 compares this brightness signal Y with a specified threshold value, and extracts regions that are smaller than this threshold value as dark regions.

Furthermore, using these results, the dark area detection unit 172 labels the down sampled three CCD image in pixel units, and transmits this image to the region estimating unit 173. In regard to the concrete labels that are applied in this case, for example, 2 is applied to dark regions, and 0 is applied to other regions.

On the basis of information from the skin color detection unit 171 and information from the dark area detection unit 172, the region estimating unit 173 outputs skin color regions as 1, dark regions as 2, regions that are both skin color regions and dark regions as 3, and other regions as 0, to the buffer 163.

The correction unit 118 reads out this label information from the buffer 163, and adjusts the gain used for correction in accordance with the values of the labels. For example, in the case of the label 3 (skin color region and dark region), the gain is set as "strong" (e. g., 1.5 to 2.0), in the case of the label 1 (skin color region) or label 2 (dark region), the gain is set as "medium" (e. g., 1.0 to 1.5), and in the case of the label 0 (other), the gain is set as "weak" (e. g., 0.5 to 1.0).

Furthermore, in the example shown in Fig. 23A, color information and brightness information are used to estimate the shooting situation of the respective regions in the image. However, the present invention is not limited to the use of such information; for example, it would also be possible to use frequency information as shown in Fig. 23B.

Another example of the construction of the shooting situation estimating unit 116 will be described with reference to Fig. 23B.

The shooting situation estimating unit 116 comprises: a high-frequency detection unit 175 constituting frequency detection means which is image characteristic detection means that reads out RGB three CCD images from the abovementioned interpolating unit 162 in block units, and detects high-frequency components; and the region estimating unit 173 which applies labels proportional to the high-frequency components detected by the abovementioned high-frequency detection unit 175, and transmit the labeled images to the buffer 163. The abovementioned high-frequency detection unit 175 is connected bidirectionally with the abovementioned control unit 122, and is controlled by the control unit 122.

In greater detail, the abovementioned high-frequency detection unit 175 reads out RGB three CCD images from the abovementioned interpolating unit 162 in a specified block size, e. g., in $8 \times 8$ pixel units, converts these images into frequency components by a universally known DCT (discrete cosine transform), determines the quantity of high-frequency components in each block from the frequency components produced by this conversion, and transmits this data to the region estimating unit 173 in block units.

The region estimating unit 173 applies labels proportional to the quantity of high-frequency components to the blocks, and transmits these labeled blocks to the buffer 163.

The correction unit 118 reads out the label information stored in the buffer 163, subjects this label information to expansion processing in accordance with the proportion of down sampling performed by the abovementioned down sampling unit 161 and the block size used in the abovementioned high-frequency detection unit 175, and corrects the amount of noise in pixel unit transmitted from the noise estimating unit 117.

Furthermore, in the above description, conversion into frequency components is accomplished by DCT. However, the present invention is of course not limited to this; appropriate conversion such as Fourier conversion, Wavelet conversion or the like may be widely used.

Next, one example of the construction of the noise estimating unit 117 will be described with reference to Fig. 24.

The basic construction of the noise estimating unit 117 is similar to that of the noise estimating unit 117 shown in Fig. 17 in the abovementioned third embodiment; however, this embodiment differs from the third embodiment in that a look-up table unit 181 constituting look-up table means which is noise amount calculating means is provided instead of the abovementioned coefficient calculating unit 146, parameter ROM 147 and function calculating unit 148.

The look-up table unit 181 is connected bidirectionally with the control unit 122, and is controlled by the control unit 122; the look-up table unit 181 inputs information from the abovementioned average calculating unit 143, gain calculating unit 144 and standard value assigning unit 145, and outputs processing results to the correction unit 118.

The look-up table unit 181 is a unit which constructs and records the relationships between the signal value level, gain, shutter speed and temperature of the image pickup element, and the amount of noise beforehand as a look-up table by means similar to those used in the abovementioned third embodiment. On the basis of the signal value levels of pixels of interest calculated by the abovementioned average calculating unit 143, the gain calculated by the abovementioned gain calculating unit 144, information relating to the shutter speed and temperature of the image pickup element transmitted from the abovementioned control unit 122, and standard values assigned as necessary from the abovementioned standard value assigning unit 145, the look-up table unit 181 refers to the look-up table and estimates the amount of noise, and transmits this amount of noise to the correction unit 118.

Furthermore, in the above description, the system is constructed such that noise reduction processing is performed at the time of shooting; however, the present invention is not limited to this. For example, the video signals output from the CCD 105 may be handled as unprocessed raw data, and information from the abovementioned control unit 122 such as the temperature of the image pickup element during shooting, the gain, the shutter speed and the like may be added to this raw data as header information. The system may be devised such that raw data to which this header information has been added is output to a processing device such as a computer or the like, and is processed by software in this processing device.

An example in which noise reduction processing is performed by an image processing program in a computer will be described with reference to Figs. 25 and 26. Furthermore, Figs. 25 and 26 relate to a series of processing operations.

When the processing is started, the full color signals constituting the raw data, and header information including information such as the temperature, gain, shutter speed and the like, are first read in (step S101).

Next, the video signals are sampled down to a specified size (step S102), and an RGB three CCD image is produced by universally known linear interpolation (step S103).

Color difference signals Cb and Cr are determined from the RGB thus produced, and colors in which these color difference signals Cb and Cr are within a specified range are extracted as skin color regions (step S104).

Meanwhile, a brightness signal Y is determined from the RGB produced in the abovementioned step S103, regions in which this brightness signal Y is below a specified threshold value are extracted as dark regions (step S105).

Labeling relating to the skin color regions extracted in step S104 and the dark regions extracted in step S105 is performed (step S106), and the applied label information is output (step S107).

Next, the video signals read in in step S101 are separated into respective color signals (step S108), and local regions of a specified size centered on the pixels of interest, e. g., local regions of $4 \times 1$ pixel units are extracted (step S109). The signal value levels of the pixels of interest are then calculated to be average values for the local regions (step S110).

Furthermore, parameters such as the temperature, gain, shutter speed and the like are determined from the header information read in, in step S101; in this case, if required parameters are absent from the header information, specified standard values are assigned (step S111).

The amount of noise is calculated by referring to the look-up table on the basis of the signal value levels determined in step S110 and the parameters such as the temperature, gain, shutter speed and the like determined in step S111 (step S112).

Meanwhile, the label information output in step S107 is read in, and labels corresponding to the pixels of interest are transmitted to step S114 (step S113).

The amount of noise determined in step S112 is corrected on the basis of the label information read in, in step S113 (step S114).

The color signals separated in step S108 are extracted in horizontal line units (step S115), and universally known hysteresis smoothing is performed on the basis of the amount of noise corrected in step S114 (step S116).

Then, a judgement is made as to whether or not processing has been completed for all horizontal lines (step S117), and in cases where this processing has not been completed, the processing of the abovementioned steps S109 through S116 is repeated.

On the other hand, in cases where processing has been completed for all horizontal lines, a signal that is smoothed in the horizontal direction is output (step S118).

Next, for the signal that has been smoothed in the horizontal direction, local regions of a specified size centered on the pixels of interest, e. g., local regions comprising $1 \times 4$ pixel units, are extracted (step S119), and the signal value levels of the pixels of interest are calculated to be average values for these local regions (step S120).

Furthermore, parameters such as the temperature, gain, shutter speed and the like are determined from the header information read in, in step S111; in this case, if required parameters are absent from the header information, specified standard values are assigned (step S121).

The amount of noise is calculated by referring to the look-up table on the basis of the signal value levels determined in step S120 and the parameters such as the temperature, gain, shutter speed and the like determined in step S121 (step S122).

Meanwhile, the label information output in step S107 is read in, and labels corresponding to the pixels of interest are transmitted to step S124 (step S123).

The amount of noise determined in step S122 is corrected on the basis of the label information read in in step S123 (step S124).

The color signals smoothed in the horizontal direction in step S118 are extracted in vertical line units (step S125), and universally known hysteresis smoothing is performed on the basis of the amount of noise corrected in step S124 (step S126).

Then, a judgement is made as to whether or not processing has been completed for all of the vertical lines (step S127), and if this processing has not been completed, the processing of the abovementioned steps S119 through S126 is repeated.

On the other hand, in cases where processing has been completed for all of the vertical lines, a signal that has been smoothed in both the horizontal direction and vertical direction is output (step S128).

Afterward, a judgement is made as to whether or not processing has been completed for all color signals (step S129); if this processing has not been completed, the processing of the abovementioned steps S108 through S128 is repeated. On the other hand, if processing has been completed, this processing is ended.

In this fourth embodiment, an effect that is more or less similar to that of the abovementioned third embodiment can be obtained; furthermore, since the shooting situation for respective regions in one shooting image is determined by performing skin color detection, dark area detection and high-frequency detection, and the amount of noise is corrected for each region, high-precision noise reduction processing which is suited to respective regions can be performed, so that an image with subjectively desirable high quality can be obtained. Furthermore, it is also possible to construct diverse image pickup systems according to applications by applying either the determination of the shooting situation of the overall signal as indicated in the third embodiment, or the determination of the shooting situation of respective regions as indicated in this fourth embodiment, as required.

Furthermore, since the shooting situation for respective regions is estimated from signals whose size has been reduced by down sampling the video signals at a specified interval, high-speed processing is possible, and the memory size used for operation can be reduced; accordingly, an image pickup system can be constructed at a low cost.

Furthermore, since a look-up table is used when the amount of noise is calculated, high-speed processing can be performed.

The embodiments of the present invention have been described. However, the present invention is not limited to these and, obviously, can be changed without departing from the spirit of the present invention.

Industrial Applicability

As mentioned above, according to the present invention, it is possible to achieve an appropriate reduction of noise in the image, so that a high-quality image can be obtained.

Cross-reference of Related Application

The present application is based on the priority of Japanese Patent Application No. 2002-242400 filed in Japan on August 22, 2002. The disclosure is referred to the description, claims, and drawings of the present invention.

**Claims**

1. An image pickup system comprising:

   noise estimating means for estimating the amount of noise contained in digitized signals from an image pickup element in which a plurality of pixels are arranged, for each pixel or for each specified unit area comprising a plurality of pixels; and
   noise reducing means for reducing the noise contained in the signals on the basis of the amount of noise estimated by the noise estimating means.

2. The image pickup system according to claim 1, further comprising:

   color filters which are arranged at the front of the image pickup element; and
   separating means for separating the signals output from the image pickup element into signals for each of the color filters.

3. The image pickup system according to claim 2, wherein the noise estimating means comprises:

   parameter calculating means for calculating parameters on the basis of at least one type of information selected among the signal value level of the signals, the temperature of the image pickup element, the gain for the signals, and the shutter speed during shooting; and
   noise amount calculating means for calculating the estimated amount of noise on the basis of the parameters calculated by the parameter calculating means.

4. The image pickup system according to claim 2, wherein the noise estimating means comprises upper limit value setting means for setting an upper limit value on the estimated amount of noise.

5. The image pickup system according to claim 2, wherein the noise reducing means comprises:

   threshold value setting means for setting the amplitude value of the noise as a threshold value for each pixel or for each specified unit area comprising a plurality of pixels on the basis of the amount of noise estimated by the noise estimating means; and

   smoothing means for reducing the amplitude component in the signals which are below the threshold value set by the threshold value setting means.

6. The image pickup system according to claim 2, wherein the noise reducing means comprises:

   control value setting means for setting control values used to control the frequency characteristics of the smoothing processing on the basis of the amount of noise estimated by the noise estimating means; and smoothing means for performing smoothing processing that reduces a specified frequency band in the signals on the basis of the control values set by the control value setting means.

7. The image pickup system according to claim 3, wherein the parameter calculating means comprises signal value calculating means for determining the signal value levels by averaging a plurality of pixel values in a nearby region of a specified size or in the unit area that includes the pixel of interest.

8. The image pickup system according to claim 3, wherein the parameter calculating means comprises a temperature sensor that measures the temperature of the image pickup element.

9. The image pickup system according to claim 3, wherein the image pickup element comprises an OB (optical black) region, and the parameter calculating means comprises:

   variance calculating means for calculating the variance of the signals in the OB region; and temperature estimating means for estimating the temperature of the image pickup element on the basis of the variance calculated by the variance calculating means.

10. The image pickup system according to claim 3, wherein the parameter calculating means comprises gain calculating means for determining the gain on the basis of at least one type of information selected among the ISO sensitivity, exposure information and white balance information.

11. The image pickup system according to claim 3, wherein the parameter calculating means comprises shutter speed calculating means for determining the shutter speed during the shooting from exposure information.

12. The image pickup system according to claim 3, wherein the noise amount calculating means calculates the amount of noise N using the signal value level L of the signals, the temperature T of the image pickup element, the gain G for the signals and the shutter speed S during shooting as parameters, and the noise amount calculating means comprises:

   coefficient calculating means for calculating four coefficients A, B, C and D on the basis of three functions a(T, G), b(T, G) and c(T, G) using the temperature T and gain G as parameters, and a function d(S) using the shutter speed S as a parameter; and

   function calculating means for calculating the amount of noise N on the basis of a functional equation

   $$N = (AL^B + C)D$$

   defined by the four coefficients A, B, C and D calculated by the coefficient calculating means.

13. The image pickup system according to claim 12, wherein the noise amount calculating means further comprises assigning means for assigning standard parameter values, and the parameters are values calculated by the parameter calculating means, or standard values assigned by the assigning means.

**14.** The image pickup system according to claim 3, wherein the noise amount calculating means comprises:

assigning means for assigning standard parameter values for parameters not obtained from the parameter calculating means; and

look-up table means for determining the amount of noise by inputting the signal value level, temperature, gain and shutter speed obtained from the parameter calculating means or the assigning means.

**15.** The image pickup system according to claim 1, wherein the noise estimating means comprises:

parameter calculating means for calculating parameters on the basis of at least one type of information selected among the signal value level of the signals, the temperature of the image pickup element, the gain for the signals and the shutter speed during shooting; and

noise amount calculating means for calculating the estimated amount of noise on the basis of the parameters calculated by the parameter calculating means.

**16.** The image pickup system according to claim 1, wherein the noise estimating means comprises upper limit value setting means for setting an upper limit value on the estimated amount of noise.

**17.** The image pickup system according to claim 1, wherein the noise reducing means comprises:

threshold value setting means for setting the amplitude value of the noise as a threshold value for each pixel or for each specified unit area comprising a plurality of pixels on the basis of the amount of noise estimated by the noise estimating means; and

smoothing means for reducing the amplitude components in the signals which are below the threshold value set by the threshold value setting means.

**18.** The image pickup system according to claim 1, wherein the noise reducing means comprises:

control value setting means for setting control values used to control the frequency characteristics of the smoothing processing on the basis of the amount of noise estimated by the noise estimating means; and

smoothing means for performing smoothing processing that reduces a specified frequency band in the signals on the basis of the control values set by the control value setting means.

**19.** The image pickup system according to claim 15, wherein the parameter calculating means comprises signal value calculating means for calculating the signal value levels by averaging a plurality of pixel values in a nearby region of a specified size or in the unit area that includes the pixel of interest.

**20.** The image pickup system according to claim 15, wherein the parameter calculating means comprises a temperature sensor that measures the temperature of the image pickup element.

**21.** The image pickup system according to claim 15, wherein the image pickup element comprises an OB (optical black) region, and the parameter calculating means comprises:

variance calculating means for calculating the variance of the signals in the OB region; and

temperature estimating means for estimating the temperature of the image pickup element on the basis of the variance calculated by the variance calculating means.

**22.** The image pickup system according to claim 15, wherein the parameter calculating means comprises gain calculating means for determining the gain on the basis of at least one type of information selected among the ISO sensitivity, exposure information and white balance information.

**23.** The image pickup system according to claim 15, wherein the parameter calculating means comprises shutter speed calculating means for determining the shutter speed during the shooting from exposure information.

**24.** The image pickup system according to claim 15, wherein the noise amount calculating means calculates the amount of noise N using the signal value level L of the signals, the temperature T of the image pickup element, the gain G for the signals and the shutter speed S during shooting as parameters, and the noise amount calculating means comprises:

coefficient calculating means for calculating four coefficients A, B, C and D on the basis of three functions a (T, G), b(T, G) and c(T, G) using the temperature T and gain G as parameters, and a function d(S) using the shutter speed S as a parameter; and

function calculating means for calculating the amount of noise N on the basis of a functional equation

$$N = (AL^B + C)D$$

defined by the four coefficients A, B, C and D calculated by the coefficient calculating means.

25. The image pickup system according to claim 24, wherein the noise amount calculating means further comprises assigning means for assigning standard parameter values, and the parameters are values calculated by the parameter calculating means, or standard values assigned by the assigning means.

26. The image pickup system according to claim 15, wherein the noise amount calculating means comprises:

assigning means for assigning standard parameter values for parameters not obtained from the parameter calculating means; and

look-up table means for determining the amount of noise by inputting the signal value level, temperature, gain and shutter speed obtained from the parameter calculating means or the assigning means.

27. An image pickup system comprising:

separating means for separating digitized signals from an image pickup element which has primary- or complementary-color filters arranged at the front thereof into color signals for each of the color filters;

signal value calculating means for determining the signal value level for the respective color signals by averaging a plurality of pixel values in a nearby region of a specified size or in a unit area that includes the pixel of interest;

gain calculating means for determining the gain for the signals on the basis of at least one type of information selected among the ISO sensitivity, exposure information and white balance information;

look-up table means for determining the amount of noise by inputting the signal value level and the gain for the respective color signals and referring to a look-up table in which a correspondence between the input values and the amount of noise is described;

small amplitude value setting means for setting a small amplitude value for each pixel or for each specified unit area comprising a plurality of pixels on the basis of the amount of noise for the respective color signals; and

smoothing means for reducing amplitude components that are equal to or less than the small amplitude value set by the small amplitude value setting means for the respective color signals.

28. An image processing program comprising:

a noise estimating routine for estimating the amount of noise contained in digitized signals from an image pickup element in which a plurality of pixels are arranged, either for each pixel or for each specified unit area comprising a plurality of pixels;

a threshold value setting routine for setting the amplitude value of the noise as a threshold value for each pixel or each specified unit area comprising a plurality of pixels on the basis of the amount of noise estimated by the noise estimating routine; and

a smoothing routine for reducing the amplitude components in the signals that are equal to or less than the threshold value set by the threshold value setting routine.

29. An image processing program comprising:

a noise estimating routine for estimating the amount of noise contained in digitized signals from an image pickup element in which a plurality of pixels are arranged, either for each pixel or for each specified unit area comprising a plurality of pixels;

a control value setting routine for setting control values used to control the frequency characteristics of the smoothing processing on the basis of the amount of noise estimated by the noise estimating routine; and

a smoothing routine for performing smoothing processing that reduces a specified frequency band in the signals on the basis of the control values set by the control value setting routine.

**30.** An image processing program comprising:

a variance calculating routine for calculating the signal variance in the OB regions of digitized signals from an image pickup element in which a plurality of pixels are arranged and which has an OB (optical black) region;
a temperature estimating routine for estimating the temperature of the image pickup element on the basis of the variance calculated by the variance calculating routine;
a parameter calculating routine for calculating parameters on the basis of at least one type of information selected among the temperature of the image pickup element estimated by the temperature estimating routine, the signal value level of the signals, the gain for the signals and the shutter speed during shooting;
a noise amount calculating routine for calculating the amount of noise estimated to be contained in the signals on the basis of the parameters calculated by the parameter calculating routine, either for each pixel or a specified unit area comprising a plurality of pixels; and
a noise reducing routine for reducing the noise in the signals on the basis of the amount of noise calculated by the noise amount calculating routine.

**31.** An image processing program comprising:

a parameter calculating routine for calculating the signal value level L of digitized signals from an image pickup element in which a plurality of pixels are arranged, the temperature T of the image pickup element, the gain G for the signals and the shutter speed S during shooting as parameters;
a coefficient calculating routine for calculating four coefficients A, B, C and D on the basis of three functions a(T, G), b(T, G) and c(T, G) using the temperature T and gain G as parameters, and a function d(S) using the shutter speed S as a parameter;
a function calculating routine for calculating the amount of noise N estimated to be contained in the signals on the basis of a functional equation

$$N = (AL^B + C)D$$

defined by the four coefficients A, B, C and D calculated by the coefficient calculating routine, either for each pixel or for each specified unit area comprising a plurality of pixels; and
a noise reducing routine for reducing the noise in the signals on the basis of the amount of noise calculated by the function calculating routine.

**32.** An image processing program comprising:

a separating routine for separating digitized signals from an image pickup element which has primary- or complementary-color filters arranged at the front thereof into color signals for each of the color filters;
a signal value calculating routine for determining the signal value level for the respective color signals by averaging a plurality of pixel values in a nearby region of a specified size or in a unit area that includes the pixel of interest;
a gain calculating routine for determining the gain for the signals on the basis of at least one type of information selected among the ISO sensitivity, exposure information and white balance information;
a look-up table routine for determining the amount of noise by inputting the signal value level and the gain for the respective color signals and referring to a look-up table in which a correspondence between the input values and the amount of noise is described;
a small amplitude value setting routine for setting a small amplitude value for each pixel or for each specified unit area comprising a plurality of pixels on the basis of the amount of noise for the respective color signals; and
a smoothing routine for reducing amplitude components that are equal to or less than the small amplitude value set by the small amplitude value setting routine for the respective color signals.

**33.** An image pickup system comprising:

noise estimating means for estimating the amount of noise contained in a digitized signal from an image pickup element composed of an array of a plurality of pixels, either for each pixel or for each specified unit area comprising a plurality of pixels;
shooting situation estimating means for estimating the shooting situation when an image based on the signal is acquired;

correction means for correcting the amount of noise estimated by the noise estimating means on the basis of the shooting situation estimated by the shooting situation estimating means; and

noise reducing means for reducing the noise in the signal on the basis of the amount of noise corrected by the correction means.

34. The image pickup system according to claim 33, further comprising:

color filters that are arranged on the front surface of the image pickup element; and

separating means for separating the signal that is output from the image pickup element into signals for each color filter.

35. The image pickup system according to claim 34, wherein the noise estimating means comprises:

parameter calculating means for calculating parameters on the basis of at least one type of information selected among the signal value level of the signal, the temperature of the image pickup element, the gain for the signal, and the shutter speed during shooting; and

noise amount calculating means for calculating the amount of noise on the basis of the parameters calculated by the parameter calculating means.

36. The image pickup system according to claim 34, wherein the shooting situation estimating means comprises at least either one of overall estimating means for estimating the shooting situation for the overall signal when an image based on the signal is acquired, or regional estimating means for estimating the shooting situation for each region when an image based on the signal is acquired.

37. The image pickup system according to claim 34, wherein the shooting situation estimating means has overall estimating means for estimating the shooting situation for the overall signal when an image base on the signal is acquired, on the basis of at least one type of information selected among focus information, exposure information, zoom position information, eye sensing information and strobe light emission information.

38. The image pickup system according to claim 34, wherein the shooting situation estimating means comprises:

focusing position estimating means for estimating, based on the focus information, to which shooting the focusing position belongs among three or more types of shooting at least including scenery shooting, portrait shooting and close-up shooting;

shooting-subject distribution estimating means for estimating, based on the exposure information, to which shooting the shooting-subject distribution belongs among three or more types of shooting at least including overall signal, central emphasis or central portion; and

overall estimating means for estimating the shooting situation relating to the overall signal when an image based on the signal is acquired, by combining the focusing position estimated by the focusing position estimating means and the shooting-subject distribution estimated by the shooting-subject distribution estimating means.

39. The image pickup system according to claim 34, wherein the shooting situation estimating means comprises overall estimating means for estimating and judging, on the basis of exposure information, whether or not the shooting situation relating to the overall signal when an image based on the signal is acquired is of night view shooting.

40. The image pickup system according to claim 34, wherein the shooting situation estimating means comprises:

image characteristic detection means for detecting, on the basis of the signal, the characteristics of the image based on the signal; and

regional estimating means for estimating the shooting situation of respective regions when an image based on the signal is acquired, on the basis of the image characteristics detected by the image characteristic detection means.

41. The image pickup system according to claim 40, wherein the image characteristic detection means comprises at least one type of means selected among specific color detection means for detecting specific color regions as image characteristics from the signal, specific brightness detection means for detecting specific brightness regions as image characteristics from the signal, and frequency detection means for determining frequency information in local regions of a specified size as image characteristics from the signal.

**42.** The image pickup system according to claim 40, wherein the shooting situation estimating means further comprises down sampling means for down sampling the signal, and the image characteristic detection means detects the image characteristics of the image on the basis of the signal down sampled by the down sampling means.

**43.** The image pickup system according to claim 34, wherein the noise reducing means comprises:

threshold value setting means for setting the amplitude value of the noise as a threshold value on the basis of the amount of noise corrected by the correction means, either for each pixel, or for each specified unit area comprising a plurality of pixels; and
smoothing means for reducing the amplitude components in the signal that are equal to or less than the threshold value set by the threshold value setting means.

**44.** The image pickup system according to claim 35, wherein the noise amount calculating means is means that calculates the amount of noise N using the signal value level L of the signal, the temperature T of the image pickup element, the gain G for the signal and the shutter speed S during shooting as parameters, and comprises:

coefficient calculating means for calculating four coefficients A, B, C and D on the basis of three functions a (T, G), b(T, G) and c(T, G) using the temperature T and gain G as parameters, and a function d(S) using the shutter speed S as a parameter; and
function calculating means for calculating the amount of noise N on the basis of a functional formula

$$N = (AL^B + C)D$$

defined by the four coefficients A, B, C and D calculated by the coefficient calculating means.

**45.** The image pickup system according to claim 44, wherein the noise amount calculating means further comprises assigning means for assigning standard parameter values, and the parameters are values calculated by the parameter calculating means, or standard values assigned by the assigning means.

**46.** The image pickup system according to claim 35, wherein the noise amount calculating means comprises:

assigning means for assigning standard values as standard parameter values for parameters not obtained from the parameter calculating means; and
look-up table means for determining the amount of noise by inputting the signal value level, temperature, gain and shutter speed obtained from the parameter calculating means or the assigning means.

**47.** The image pickup system according to claim 33, wherein the noise estimating means comprises:

parameter calculating means for calculating parameters on the basis of at least one type of information selected among the signal value level of the signal, the temperature of the image pickup element, the gain for the signal and the shutter speed during shooting; and
noise amount calculating means for calculating the amount of noise on the basis of the parameters calculated by the parameter calculating means.

**48.** The image pickup system according to claim 33, wherein the shooting situation estimating means comprises at least either one of overall estimating means for estimating the shooting situation for the overall signal when an image based on the signal is acquired, or regional estimating means for estimating the shooting situation for each region when an image based on the signal is acquired.

**49.** The image pickup system according to claim 33, wherein the shooting situation estimating means has overall estimating means for estimating the shooting situation for the overall signal when an image based on the signal is acquired, on the basis of at least one type of information selected among focus information, exposure information, zoom position information, eye sensing information and strobe light emission information.

**50.** The image pickup system according to claim 33, wherein the shooting situation estimating means comprises:

focusing position estimating means for estimating, based on the focus information, to which shooting the focusing position belongs among three or more types of shooting at least including scenery shooting, portrait shooting and close-up shooting;

shooting-subject distribution estimating means for estimating, based on the exposure information, to which shooting the shooting-subject distribution belongs among three or more types of imaging at least including overall signal, central emphasis or central portion; and

overall estimating means for estimating the shooting situation relating to the overall signal when an image based on the signal is acquired, by combining the focusing position estimated by the focusing position estimating means and the shooting-subject distribution estimated by the shooting-subject distribution estimating means.

51. The image pickup system according to claim 33, wherein the shooting situation estimating means comprises overall estimating means for estimating and judging, on the basis of exposure information, whether or not the shooting situation relating to the overall signal when an image based on the signal is acquired is night view shooting.

52. The image pickup system according to claim 33, wherein the shooting situation estimating means comprises:

image characteristic detection means for detecting, on the basis of the signal, the characteristics of the image based on the signal; and

regional estimating means for estimating the shooting situation of respective regions when an image based on the signal is acquired, on the basis of the image characteristics detected by the image characteristic detection means.

53. The image pickup system according to claim 52, wherein the image characteristic detection means comprises at least one type of means selected among specific color detection means for detecting specific color regions as image characteristics from the signal, specific brightness detection means for detecting specific brightness regions as image characteristics from the signal, and frequency detection means for determining frequency information in local regions of a specified size as image characteristics from the signal.

54. The image pickup system according to claim 52, wherein the shooting situation estimating means further comprises down sampling means for down sampling the signal, and the image characteristic detection means detects the image characteristics of the image on the basis of the signal down sampled by the down sampling means.

55. The image pickup system according to claim 33, wherein the noise reducing means comprises:

threshold value setting means for setting the amplitude value of the noise as a threshold value on the basis of the amount of noise corrected by the correction means, either for each pixel, or for each specified unit area comprising a plurality of pixels; and

smoothing means for reducing the amplitude components in the signal that are equal to or less than the threshold value set by the threshold value setting means.

56. The image pickup system according to claim 47, wherein the noise amount calculating means is means that calculates the amount of noise N using the signal value level L of the signal, the temperature T of the image pickup element, the gain G for the signal and the shutter speed S during shooting as parameters, and comprises:

coefficient calculating means for calculating four coefficients A, B, C and D on the basis of three functions a(T, G), b(T, G) and c(T, G) using the temperature T and gain G as parameters, and a function d(S) using the shutter speed S as a parameter; and

function calculating means for calculating the amount of noise N on the basis of a functional formula

$$N = (AL^B + C)D$$

defined by the four coefficients A, B, C and D calculated by the coefficient calculating means.

57. The image pickup system according to claim 56, wherein the noise amount calculating means further comprises assigning means for assigning standard parameter values, and the parameters are values calculated by the parameter calculating means, or standard values assigned by the assigning means.

**58.** The image pickup system according to claim 47, wherein the noise amount calculating means comprises:

assigning means for assigning standard values as standard parameter values for parameters not obtained from the parameter calculating means; and

look-up table means for determining the amount of noise by inputting the signal value level, temperature, gain and shutter speed obtained from the parameter calculating means or the assigning means.

**59.** An image processing programs comprising:

a noise estimating routine for estimating the amount of noise contained in digitized signals from an image pickup element composed of an array of a plurality of pixels, either for each pixel or for each specified unit area comprising a plurality of pixels;

a shooting situation estimating routine for estimating the shooting situation when an image based on the signal is acquired;

a correction routine for correcting the amount of noise estimated by the noise estimating routine on the basis of the shooting situation estimated by the shooting situation estimating routine; and

a noise reducing routine for reducing the noise in the signal on the basis of the amount of noise corrected by the correction routine.

# FIG.1

1 : LENS SYSTEM

2 : APERTURE

3 : LOW-PASS FILTER

4 : CCD

5 CDS

6 AMPLIFIER

7 A/D CONVERTER

8 IMAGE BUFFER

12 NOISE REDUCING UNIT

14 SIGNAL PROCESSING UNIT

15 OUTPUT UNIT

13 NOISE ESTIMATING UNIT

11 : AF MOTOR

9 EXPOSURE CONTROL UNIT

10 FOCUS DETECTION UNIT

16 CONTROL UNIT

17 EXTERNAL I/F UNIT

EP 1 551 173 A1

32

# FIG.2

# FIG.3

## (A)

IMAGE
REGION

OB
REGION

## (B)

OB
REGION

IMAGE
REGION

UPPER END
OB REGION

LEFT END
OB REGION

RIGHT END
OB REGION

LOWER END OB REGION

# FIG.4

TEMPERATURE

VARIANCE

# FIG.9

| R | G1 |
|----|----|
| G2 | B |

34

# FIG.5

## (A)

AMOUNT OF NOISE (N)

$N = AL^B + C$

SIGNAL VALUE LEVEL (L)

## (B)

AMOUNT OF NOISE (N)

TEMPERATURE 3
GAIN×4
GAIN×2
GAIN×1

TEMPERATURE 2
GAIN×4
GAIN×2
GAIN×1

TEMPERATURE (T)

$N = a(T, G)L^{b(T, G)} + c(T, G)$

TEMPERATURE 1
GAIN×4
GAIN×2
GAIN×1

SIGNAL VALUE LEVEL (L)

EP 1 551 173 A1

# FIG.6

**(A)** **(B)** **(C)**

A=a (T, G)

B=b (T, G)

C=c (T, G)

**(D)**

D=d (S)

$S_{TH}$

SHUTTER SPEED (S)

# FIG.7

*12* : NOISE REDUCING UNIT

IMAGE BUFFER — *8*

*41* HORIZONTAL LINE EXTRACTION UNIT

*42* FIRST SMOOTHING UNIT

*43* BUFFER

*13* NOISE ESTIMATING UNIT

*46* THRESHOLD VALUE SETTING UNIT

*16* CONTROL UNIT

*45* SECOND SMOOTHING UNIT

*44* VERTICAL LINE EXTRACTION UNIT

SIGNAL PROCESSING UNIT *14*

EP 1 551 173 A1

FIG.8

# FIG.10

13 : NOISE ESTIMATING UNIT

COLOR SIGNAL SEPARATING UNIT ∕54

LOCAL REGION EXTRACTION UNIT ∕26

BUFFER ∕61

AVERAGE AND VARIANCE CALCULATING UNIT ∕62

CONTROL UNIT ∕16

GAIN CALCULATING UNIT ∕29

STANDARD VALUE ASSIGNING UNIT ∕30

LOOK-UP TABLE UNIT ∕63

NOISE REDUCING UNIT ∕12

EP 1 551 173 A1

# FIG.11

*12* : NOISE REDUCING UNIT

```
┌─────────────┐          ┌──────────────┐    ┌──────────────┐    ┌──────────┐      ┌──────────────┐
│ COLOR SIGNAL│          │ LOCAL REGION │    │  FILTERING   │    │  BUFFER  │      │    SIGNAL    │
│ SEPARATING  │─────────▶│  EXTRACTION  │───▶│     UNIT     │───▶│          │─────▶│  PROCESSING  │
│    UNIT     │   /54    │     UNIT     │    │      /72     │    │   /73    │      │     UNIT     │
└─────────────┘          │     /71      │    └──────────────┘    └──────────┘      │     /14      │
                         └──────────────┘                                          └──────────────┘

┌─────────────┐                    ┌──────────────┐         ┌──────────────┐
│    NOISE    │                    │     SIZE     │         │ COEFFICIENT  │
│ ESTIMATING  │ ─ ─ ─ ─ ─ ─ ─ ─ ─ ▶│ SETTING UNIT │         │     ROM      │
│    UNIT     │                    │     /74      │         │     /75      │
│     /13     │                    └──────────────┘         └──────────────┘
└─────────────┘

┌─────────────┐
│   CONTROL   │
│    UNIT     │◀───────────────────
│     /16     │
└─────────────┘
```

EP 1 551 173 A1

# FIG.12

```
                    ( START )
                        │
                        ▼
        ┌──────────────────────────────┐  S1
        │ ALL COLOR SIGNALS AND        │
        │ HEADER INFORMATION           │
        │ READ IN                      │
        └──────────────────────────────┘
                        │
                        ▼
        ┌──────────────────────────────┐  S2
        │ SEPARATION OF COLOR SIGNALS  │
        └──────────────────────────────┘
                        │
                        ▼
        ┌──────────────────────────────┐  S3
        │ SCANNING OF RESPECTIVE       │
        │ COLOR SIGNALS                │
        └──────────────────────────────┘
```

| Step | Block |
|------|-------|
| S4 | EXTRACTION OF LOCAL REGIONS |
| S5 | CALCULATION OF AVERAGE AND VARIANCE |
| S6 | SETTING OF PARAMETERS |
| S7 | TABLE READ IN AMOUNT OF NOISE CALCULATED |
| S8 | SETTING OF SIZE |
| S9 | EXTRACTION OF LOCAL REGIONS |
| S10 | READING IN OF COEFFICIENTS |
| S11 | FILTERING PROCESSING |
| S12 | OUTPUT OF SMOOTHED SIGNAL |
| S13 | SCANNING COMPLETED ? — NO / YES |
| S14 | ALL COLOR SIGNALS COMPLETED ? — NO / YES |

```
                    ( END )
```

# FIG.13

101 : LENS SYSTEM
102 : APERTURE
103 : LOW-PASS FILTER
104 : COLOR FILTER
105 : CCD
106 : TEMPERATURE SENSOR
107 : CDS
108 : AMPLIFIER
109 : A/D CONVERTER
110 : IMAGE BUFFER
111 : EXPOSURE CONTROL UNIT
112 : PRE-WB UNIT
113 : FOCUS DETECTION UNIT
114 : AF MOTOR
115 : COLOR SIGNAL SEPARATING UNIT
116 : SHOOTING CONDITIONS ESTIMATING UNIT
117 : NOISE ESTIMATING UNIT
118 : CORRECTION UNIT
119 : NOISE REDUCING UNIT
120 : SIGNAL PROCESSING UNIT
121 : OUTPUT UNIT
122 : CONTROL UNIT
123 : EXTERNAL I/F UNIT

# FIG.14

# FIG.16

# FIG.15

**116** : SHOOTING CONDITIONS
ESTIMATING UNIT

**131**

FOCUSING POSITION
ESTIMATING UNIT

**122**

CONTROL
UNIT

**132**

SHOOTING SUBJECT
DISTRIBUTION
ESTIMATING UNIT

**134**

OVERALL
ESTIMATING
UNIT

**118**

CORRECTION
UNIT

**133**

NIGHT VIEW
ESTIMATING UNIT

# FIG.17

EP 1 551 173 A1

# FIG.18

$$N=AL^B+C$$

# FIG.19

$$N=a(T, G)L^{b(T, G)}+c (T, G)$$

# FIG.20

**(A)**

COEFFICIENT (A)

TEMPERATURE (T)

A=a (T, G)

GAIN (G)

**(B)**

COEFFICIENT (B)

TEMPERATURE (T)

B=b (T, G)

GAIN (G)

**(C)**

COEFFICIENT (C)

TEMPERATURE (T)

C=c (T, G)

GAIN (G)

**(D)**

INCREMENT IN AMOUNT OF NOISE (D)

D=d (S)

$S_{TH}$

SHUTTER SPEED (S)

# FIG.21

*119* : NOISE REDUCING UNIT

*115*
COLOR SIGNAL
SEPARATING
UNIT

*151*
HORIZONTAL LINE
EXTRACTION
UNIT

*152*
FIRST
SMOOTHING UNIT

*153*
BUFFER

*118*
CORRECTION
UNIT

*156*
THRESHOLD
VALUE SETTING
UNIT

*122*
CONTROL
UNIT

*155*
SECOND
SMOOTHING
UNIT

*154*
VERTICAL LINE
EXTRACTION
UNIT

*120*
SIGNAL
PROCESSING
UNIT

EP 1 551 173 A1

48

# FIG.22

101: LENS SYSTEM
102: APERTURE
103: LOW-PASS FILTER
104: COLOR FILTER
105: CCD
106: TEMPERATURE SENSOR

114: AF MOTOR

107 CDS

108 AMPLIFIER

109 A/D CONVERTER

110 IMAGE BUFFER

115 COLOR SIGNAL SEPARATING UNIT

119 NOISE REDUCING UNIT

161 DOWN SAMPLING UNIT

118 CORRECTION UNIT

163 BUFFER

120 SIGNAL PROCESSING UNIT

111 EXPOSURE CONTROL UNIT

162 INTERPOLATING UNIT

116 SHOOTING CONDITIONS ESTIMATING UNIT

121 OUTPUT UNIT

112 PRE-WB UNIT

117 NOISE ESTIMATING UNIT

113 FOCUS DETECTION UNIT

122 CONTROL UNIT

123 EXTERNAL I/F UNIT

EP 1 551 173 A1

# FIG.23

## (A)

*116* : SHOOTING CONDITIONS
ESTIMATING UNIT

*162*

INTERPOLATING UNIT

SKIN COLOR DETECTION UNIT *171*

*173*

REGION ESTIMATING UNIT

*163*

BUFFER

*122*

CONTROL UNIT

DARK PART DETECTION UNIT *172*

## (B)

*116* : SHOOTING CONDITIONS
ESTIMATING UNIT

*162*

INTERPOLATING UNIT

*163*

HIGH-FREQUENCY DETECTION UNIT

REGION ESTIMATING UNIT

BUFFER

*175*

*173*

*122*

CONTROL UNIT

# FIG.24

EP 1 551 173 A1

# FIG.25

S101 — READ SIGNAL, HEADER INFORMATION

S102 — DOWN SAMPLING

S103 — INTERPOLATION

S104 — EXTRACT SKIN COLOR

S105 — EXTRACT DARK PART

S106 — ESTIMATE REGION

S107 — OUTPUT LABEL INFORMATION

S108 — SEPARATE COLOR SIGNALS

S109 — EXTRACT LOCAL REGION

S110 — CALCULATE AVERAGE

S111 — SET PARAMETERS

S112 — READ IN TABLE AND CALCULATE AMOUNT OF NOISE

S113 — READ IN LABEL

S114 — CORRECT AMOUNT OF NOISE

S115 — EXTRACT HORIZONTAL LINE

SMOOTHING PROCESSING

S116 — ALL HORIZONTAL LINES COMPLETED ? — NO / YES

S117 — OUTPUT HORIZONTALLY SMOOTHED SIGNAL

S118 — A

B

EP 1 551 173 A1

# FIG.26

S119 — EXTRACT LOCAL REGION

S120 — CALCULATE AVERAGE

S121 — SET PARAMETERS

S122 — RED IN TABLE AND AMOUNT OF NOISE

S123 — RED IN LABEL

S124 — CORRECT AMOUNT OF NOISE

A

B

S125 — EXTRACT VERTICAL LINE

S126 — SMOOTHING PROCESSING

S127 — ALL VERTICAL LINES COMPLETED? — NO / YES

S128 — OUTPUT HORIZONTALLY AND VERTICALLY SMOOTHED SIGNAL

S129 — ALL COLOR SIGNALS COMPLETED? — NO / YES

END

## INTERNATIONAL SEARCH REPORT

| | International application No. |
|---|---|
| | PCT/JP03/10614 |

| A. CLASSIFICATION OF SUBJECT MATTER |
|---|
| Int.Cl⁷ H04N5/232, 9/07//H04N101:00 |

According to International Patent Classification (IPC) or to both national classification and IPC

| B. FIELDS SEARCHED |
|---|
| Minimum documentation searched (classification system followed by classification symbols) |
| Int.Cl⁷ H04N5/232, 9/07 |

Documentation searched other than minimum documentation to the extent that such documents are included in the fields searched

| | | | |
|---|---|---|---|
| Jitsuyo Shinan Koho | 1922–1996 | Jitsuyo Shinan Toroku Koho | 1996–2003 |
| Kokai Jitsuyo Shinan Koho | 1971–2003 | Toroku Jitsuyo Shinan Koho | 1994–2003 |

Electronic data base consulted during the international search (name of data base and, where practicable, search terms used)

| C. DOCUMENTS CONSIDERED TO BE RELEVANT |
|---|

| Category* | Citation of document, with indication, where appropriate, of the relevant passages | Relevant to claim No. |
|---|---|---|
| X<br><br>A | JP 2000-23173 A (Eastman Kodak Japan Ltd.),<br>21 January, 2000 (21.01.00),<br>Full text; Figs. 1 to 4<br>(Family: none) | 1-4,7,15,16,<br>19<br>5,6,8-14,17,<br>18,20-59 |
| P,X<br>P,A | JP 2003-153290 A (ST Microelectronics S.r.l.),<br>23 May, 2003 (23.05.03),<br>Full text; Figs. 1 to 16<br>& EP 1289309 A1 | 1-3,15<br>4-14,16-59 |

| ☐ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 05 December, 2003 (05.12.03) | 16 December, 2003 (16.12.03) |

| Name and mailing address of the ISA/ | Authorized officer |
|---|---|
| Japanese Patent Office | |
| Facsimile No. | Telephone No. |

Form PCT/ISA/210 (second sheet) (July 1998)